(19) Europäisches Patentamt
European Patent Office
Office européen des brevets

(11) **EP 4 779 370 A1**

(12) **EUROPEAN PATENT APPLICATION**
published in accordance with Art. 153(4) EPC

(43) Date of publication:
**22.07.2026 Bulletin 2026/30**

(21) Application number: **24882043.3**

(22) Date of filing: **09.09.2024**

(51) International Patent Classification (IPC):
**G02B 6/12** (2006.01)    **G02F 1/01** (2006.01)

(52) Cooperative Patent Classification (CPC):
**G02B 6/12; G02F 1/01**

(86) International application number:
**PCT/JP2024/032226**

(87) International publication number:
**WO 2025/088926 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.10.2023 JP 2023182082**

(71) Applicant: **National Institute of Advanced
Industrial
Science and Technology
Chiyoda-ku
Tokyo 100-8921 (JP)**

(72) Inventors:
• **KONOIKE, Ryotaro
Tsukuba-shi, Ibaraki 305-8560 (JP)**
• **NAMIKI, Shu
Tsukuba-shi, Ibaraki 305-8560 (JP)**
• **KUROSU, Takayuki
Tsukuba-shi, Ibaraki 305-8560 (JP)**
• **CONG, Guangwei
Tsukuba-shi, Ibaraki 305-8560 (JP)**
• **SUZUKI, Keijiro
Tsukuba-shi, Ibaraki 305-8560 (JP)**
• **IKEDA, Kazuhiro
Tsukuba-shi, Ibaraki 305-8560 (JP)**

(74) Representative: **Lambsdorff & Lange
Patentanwälte
Partnerschaft mbB
Grillparzerstraße 12A
81675 München (DE)**

(54) **OPTICAL FILTER AND WAVELENGTH LOCKER DEVICE**

(57)    An optical filter (10) according to the present disclosure includes: a core portion (13) that is covered with a cladding portion (16), extends in one direction (z), and is capable of propagating light in a plurality of waveguide modes; and a satellite portion (17) that is covered with the cladding portion (16), extends in the one direction (z) while being apart from the core portion (13), has an effective refractive index higher than that of the cladding portion (16), and has a size smaller than a minimum size required for an optical material capable of propagating light in a single mode.

FIG. 1A

EP 4 779 370 A1

17    13    17    **10**

16

y

z

x

# FIG. 1B

# EP 4 779 370 A1

## Description

Technical Field

The present invention relates to an optical filter and a wavelength locker device.

Background Art

Regarding optical devices, it is known that a refractive index of an optical material constituting a device changes depending on a temperature. This may cause, for example, in an optical filter as an example of an optical device, a refractive index to change due to a temperature change of an optical circuit, which results in changing of an operating wavelength of the optical filter.

For example, a configuration is known in which a temperature regulation mechanism using a Peltier element or the like is provided in conjunction with an optical filter to manage the temperature of an optical circuit at a constant level. However, in such a configuration, introducing the temperature regulation mechanism incurs a cost, and managing the temperature strictly by the temperature regulation mechanism requires a large amount of effort and power consumption.

Due to such circumstances, there is a demand for an optical filter having a very low temperature dependence of an operating wavelength. For example, Patent Literature (hereinafter, referred to as PTL) 1 discloses an optical filter including two waveguides having a region in which first and second cores are optically coupled to each other in close proximity to each other, in which a periodic structure for forming a periodic perturbation of a refractive index is provided in the optically coupled region, thereby reducing the temperature dependence of a center wavelength.

Citation List

Patent Literature

PTL 1
Japanese Patent Application Laid-Open No. 2006-330104

Summary of Invention

Technical Problem

In the technique disclosed in PTL 1, two independent cores are optically coupled to each other via a cladding. The intensity of evanescent light leaking from the core to the cladding exponentially attenuates as the distance from the core increases. Therefore, in the technique disclosed in PTL 1, the optical coupling strength between the two cores is relatively weak.

When the coupling strength is weak, the size of the periodic structure for forming the periodic perturbation of the refractive index increases, and thus, in the technique disclosed in PTL 1, the device length of the optical filter becomes relatively long, making high integration difficult.

An object of the present disclosure is to provide an optical filter and a wavelength locker device that can achieve both temperature independence of an operating wavelength and high integration of an optical circuit.

Solution to Problem

An optical filter according to the present disclosure includes: a core portion that is covered with a cladding portion, extends in one direction, and is capable of propagating light in a plurality of waveguide modes; and a satellite portion that is covered with the cladding portion, extends in the one direction while being apart from the core portion, has an effective refractive index higher than that of the cladding portion, and has a size smaller than a minimum size required for an optical material capable of propagating light in a single mode.

An optical filter according to the present disclosure includes: a core portion that is covered with a cladding portion, extends in one direction, and has a plurality of waveguide modes; and a satellite portion that is covered with the cladding portion, extends in the one direction while being apart from the core portion, has an effective refractive index higher than that of the cladding portion, and does not have a waveguide mode.

A wavelength locker device according to the present disclosure includes: a first optical power monitor that measures an optical intensity of at least a part of a laser output from a laser light source; a second optical power monitor that measures an optical intensity of at least a part of the laser output having passed through the above-described optical filter; and a temperature controller that adjusts a temperature of the laser light source such that a difference between an output value of the first optical power monitor and an output value of the second optical power monitor becomes zero.

Advantageous Effects of Invention

According to the present disclosure, it is possible to achieve both temperature independence of the operating wavelength and high integration of the optical circuit.

Brief Description of Drawings

[FIGS. 1] FIGS. 1A and 1B are schematic diagrams illustrating an example of a structure of an optical filter according to Embodiment 1, FIG. 1A is a schematic diagram of the optical filter as seen from above, and FIG. 1B is a schematic cross-sectional view taken along line A-A of FIG. 1A;

[FIG. 2] FIG. 2 is a partially enlarged view for describing a periodic structure of a satellite portion;

[FIG. 3] FIG. 3 is a diagram illustrating characteristics of the optical filter according to Embodiment 1;

[FIGS. 4] FIGS. 4A to 4E are diagrams for describing a Grating-Assisted Coupler;

[FIGS. 5] FIGS. 5A to 5C are diagrams for describing a Grating-Assisted Coupler;

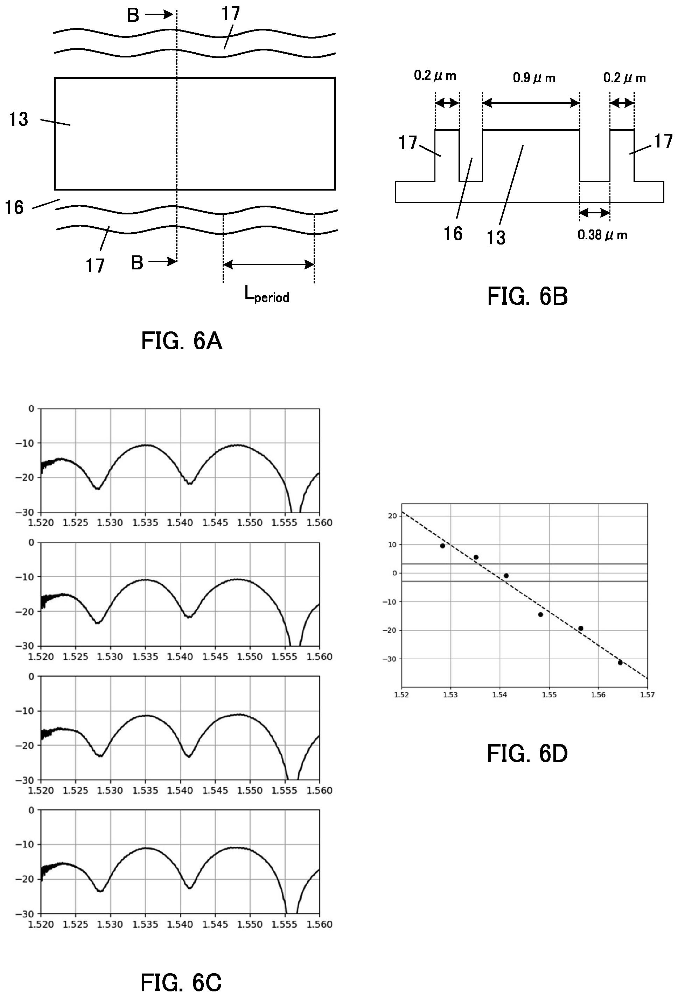

[FIGS. 6] FIGS. 6A to 6D are diagrams for describing an example of the optical filter according to Embodiment 1, FIG. 6A is a schematic top view of a waveguide structure of the optical filter as an example, FIG. 6B is a schematic cross-sectional view of the waveguide structure of the optical filter as an example, FIG. 6C is a graph illustrating a relationship between a wavelength of light incident on the optical filter illustrated in FIGS. 6A and 6B and a spectrum of the optical filter, and FIG. 6D is a graph illustrating a relationship between a temperature dependence of the wavelength ($\partial\lambda/\partial T$) and the wavelength;

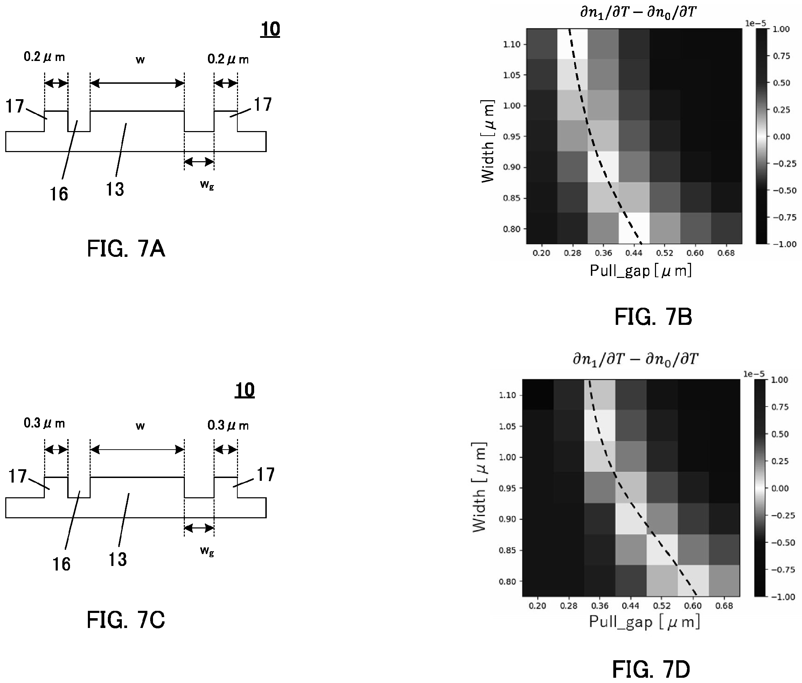

[FIGS. 7] FIGS. 7A to 7D are diagrams for describing a range in which temperature independence of the optical filter is achieved when a width w of a core portion and a distance $w_g$ between the core portion and the satellite portion are changed, FIGS. 7A and 7C illustrate an example of a cross section of the optical filter, FIG. 7B illustrates a relationship between the width w of the core portion, the distance $w_g$ between the core portion and the satellite portion, and a difference in temperature coefficient between a zeroth-order mode and a first-order mode ($\partial n_1/\partial T - \partial n_0/\partial T$) when the width of the satellite portion is 0.2 $\mu$m, and FIG. 7D illustrates a relationship between the width w of the core portion, the distance $w_g$ between the core portion and the satellite portion, and a difference in temperature coefficient between a zeroth-order mode and a first-order mode ($\partial n_1/\partial T - \partial n_0/\partial T$) when the width of the satellite portion is 0.3 $\mu$m;

[FIGS. 8] FIGS. 8A and 8B are diagrams for describing an element that can be selected to achieve temperature independence in each structure of the optical filter, FIG. 8A illustrates a cross section of the optical filter when the core portion and the satellite portion have a channel-type structure as illustrated in FIG. 1B, and FIG. 8B illustrates a cross section of the optical filter when the core portion and the satellite portion have a rib-type structure;

[FIGS. 9] FIGS. 9A to 9C are diagrams illustrating Variation 1 of the optical filter using an EO effect, FIG. 9A is a schematic top view, FIG. 9B is a cross-sectional view taken along line C-C in FIG. 9A, and FIG. 9C is a cross-sectional view taken along line D-D in FIG. 9A;

[FIGS. 10] FIGS. 10A and 10B are diagrams illustrating Variation 2 of the optical filter using an EO effect, FIG. 10A is a schematic top view, and FIG. 10B is a cross-sectional view taken along line E-E in FIG. 10A;

[FIGS. 11] FIGS. 11A and 11B are diagrams illustrating Variation 3 of the optical filter using a TO effect, FIG. 11A is a schematic top view, and FIG. 11B is a cross-sectional view taken along line F-F in FIG. 11A;

[FIGS. 12] FIGS. 12A and 12B are diagrams illustrating Variation 4 of the optical filter using a mechanical effect, FIG. 12A is a schematic top view, and FIG. 12B is a cross-sectional view taken along line G-G in FIG. 12A;

[FIG. 13] FIG. 13 is a diagram illustrating Variation 5 of the optical filter using an optical nonlinear effect;

[FIG. 14] FIG. 14 is a diagram illustrating Variation 8 of the optical filter capable of adjusting a refractive index by ion implantation;

[FIG. 15] FIG. 15 is a diagram for describing a structure of an optical filter according to Embodiment 2;

[FIG. 16] FIG. 16 is a diagram illustrating characteristics of the optical filter according to Embodiment 2;

[FIG. 17] FIG. 17 is a diagram for describing a structure of an optical filter according to Embodiment 3;

[FIG. 18] FIG. 18 is a schematic top view showing an example of a Mach-Zehnder interferometer in which incident light is split into two arms and then recombined;

[FIGS. 19] FIGS. 19A to 19E are diagrams for describing a principle in which an optical filter according to Embodiment 3 behaves as an AZMI; and

[FIG. 20] FIG. 20 is a diagram illustrating an example of a configuration of a wavelength locker device using the optical filter according to the present disclosure.

Description of Embodiments

Hereinafter, embodiments of the present disclosure will be described in detail with reference to the drawings. It should be noted that the same reference numerals are assigned to elements common to a plurality of drawings, and detailed description of the elements will not be repeated. Note that a detailed description that is unnecessary, for example, a detailed description of a matter already well known, a duplicate description for substantially the same configuration, and the like may be omitted.

<Summary>

The present disclosure provides an optical filter that can achieve both temperature independence of an operating wavelength and high integration of an optical circuit, and a wavelength locker device using the optical filter. The optical filter according to the present disclosure can be applied to both a single-peak filter having a characteristic of transmitting or removing a single wavelength and a periodic filter having periodic transmission characteristics.

In Embodiment 1, an example will be described in which the optical filter according to the present disclosure is applied to a single-peak filter, particularly a notch filter that blocks light of a specific wavelength. In Embodiment 2, an example will be described in which the optical filter according to the present disclosure is applied to a single-peak filter, particularly a band-pass filter that transmits light of a specific wavelength. In Embodiment 3, an example will be described in which the optical filter according to the present disclosure is applied to a periodic filter having a property in which a transmittance periodically varies with respect to a wavelength.

In addition, a wavelength locker device can be provided using the optical filter according to the present disclosure. In Embodiment 4, an example of a wavelength locker device using the optical filter according to the present disclosure will be described.

<Embodiment 1>

Hereinafter, an example in which the optical filter according to the present disclosure is applied to a notch filter as an example of a single-peak filter will be described.

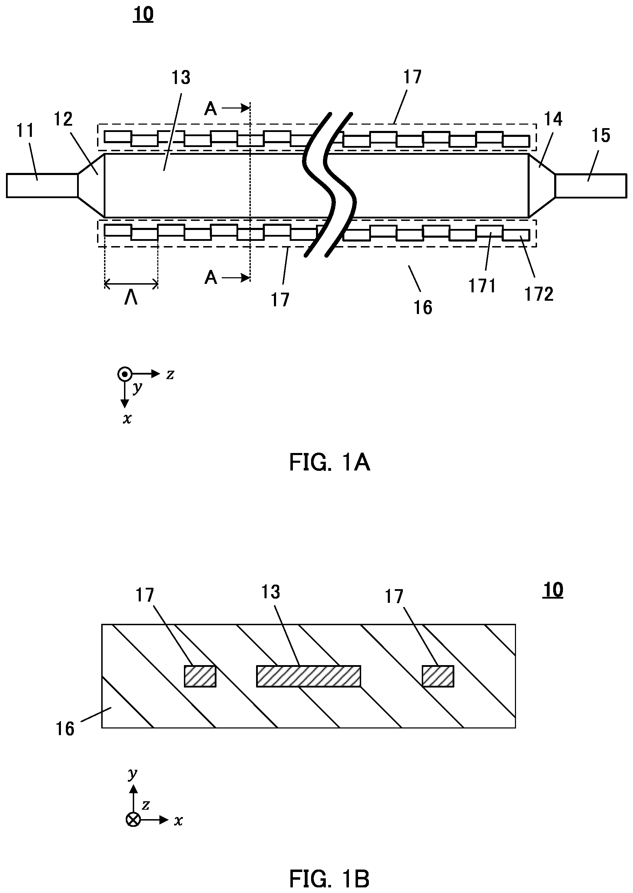

FIGS. 1A and 1B are schematic diagrams illustrating an example of a structure of an optical filter 10 according to Embodiment 1 of the present disclosure. FIG. 1A is a schematic diagram of the optical filter 10 as seen from above. FIG. 1B is a schematic cross-sectional view taken along line A-A of FIG. 1A. In FIGS. 1A and 1B, the shapes and sizes of the respective configurations are schematically illustrated and are not accurate. The optical filter 10 illustrated in FIGS. 1A and 1B is assumed to be mounted on a substrate.

In FIGS. 1A and 1B, a vertical upward direction is indicated as a y direction, a longitudinal direction of the optical filter 10 is indicated as a z direction, and a width direction of the optical filter 10 is indicated as an x direction.

The optical filter 10 includes an incident portion 11, a tapered portion 12, a core portion 13, a tapered portion 14, an output portion 15, a cladding portion 16, and a satellite portion 17. Although FIG. 1B illustrates a channel-type waveguide structure, the present invention is not limited thereto, and may have, for example, a rib-type structure.

Light is incident on the incident portion 11 from the outside. The light incident from the incident portion 11 is incident on the core portion 13 via the tapered portion 12. The tapered portion 12 has a tapered shape that widens from a connection portion with the incident portion 11 toward a connection portion with the core portion 13. The core portion 13 extends along one direction. In the present disclosure, the one direction is the longitudinal direction (z direction illustrated in FIGS. 1A and 1B) of the optical filter 10.

The tapered portion 14 is connected to the terminal end portion of the core portion 13. The tapered portion 14 has a tapered shape that narrows from a connection portion with the core portion 13 toward a connection portion with the output portion 15.

The incident portion 11, the tapered portion 12, the core portion 13, the tapered portion 14, and the output portion 15 are covered with the cladding portion 16. The incident portion 11, the tapered portion 12, the core portion 13, the tapered portion 14, and the output portion 15 are formed of the same material. The material forming the incident portion 11, the tapered portion 12, the core portion 13, the tapered portion 14, and the output portion 15 is a material having a higher refractive index than the material forming the cladding portion 16. In the optical filter 10, an optical waveguide is constituted by the incident portion 11, the tapered portion 12, the core portion 13, the tapered portion 14, output portion 15, and the cladding portion 16.

Examples of the material of the incident portion 11, the tapered portion 12, the core portion 13, the tapered portion 14, and the output portion 15 include high refractive index materials such as silicon (Si), silicon nitride (SiN), III-V semiconductor (GaAs, InP, InGaAs, InGaAsP), and ferroelectric material ($LiNbO_3$, BBO, KTP). Examples of the material of the cladding portion 16 include silicon dioxide ($SiO_2$), indium phosphide (InP), and air.

A single-mode waveguide is constituted by the incident portion 11, the output portion 15, and the cladding portion 16. In addition, a multi-mode waveguide is constituted by the core portion 13 and the cladding portion 16. The width and height of the incident portion 11 and the output portion 15 are set to a width and height that can confine only light in the zeroth-order mode (fundamental mode). The width and height of the core portion 13 are set to a width and height that can confine light in a plurality of waveguide modes, and can achieve temperature independence of the filter characteristics of the optical filter 10, in other words, temperature independence of the operating wavelength of the multi-mode waveguide, as described later.

In the following embodiments, the multi-mode waveguide constituted by the core portion 13 and the cladding portion 16 will be described as a waveguide capable of propagating (confining) the zeroth-order mode and the first-order mode. However, the present disclosure is not limited thereto, and the multi-mode waveguide constituted by the core portion and the cladding portion may be capable of confining (propagating) light in a second-order mode or higher-order mode in addition to the light in the fundamental mode and the first-order mode.

The satellite portion 17 is disposed on both sides of the core portion 13 in the width direction (x direction shown in FIGS. 1A and 1B) substantially parallel to the core portion 13. The satellite portion 17 is covered with the cladding portion 16. The core portion 13 and the satellite portion 17 are disposed apart from each other with the cladding portion 16 interposed therebetween.

The width and height of the satellite portion 17 are set to be smaller than the width and height that can confine the light in the fundamental mode of the light incident on the optical filter 10. Thus, the satellite portion 17 has a structure that does not guide light. In other words, the satellite portion 17 does not have a waveguide mode (eigenmode).

The reason why the satellite portion 17 is configured not to have a waveguide mode in the optical filter 10 is as follows. The satellite portion 17 has a role of reflecting a light component that leaks from the core portion 13 to the cladding portion 16 when light propagates through the multi-mode waveguide, and adjusting the effective refractive index of the multi-mode waveguide. This is because, in a case where the satellite portion 17 has a waveguide function, energy transfer occurs between the satellite portion 17 and the core portion 13, which is undesirable.

The satellite portion 17 is disposed such that the structure varies at a constant period. In the example illustrated in FIG. 1A, the satellite portion 17 has a zigzag structure in which a region 171 relatively close to the core portion 13 and a region 172 relatively far from the core portion 13 in a width direction (x direction in FIG. 1A) of the optical filter 10 are arranged in a zigzag manner along the longitudinal direction. In the following description, the period of the periodic structure of the satellite portion 17 (the sum of the lengths of the region 171 relatively close to the core portion 13 and the region 172 relatively far from the core portion 13 in the length direction) is denoted by A.

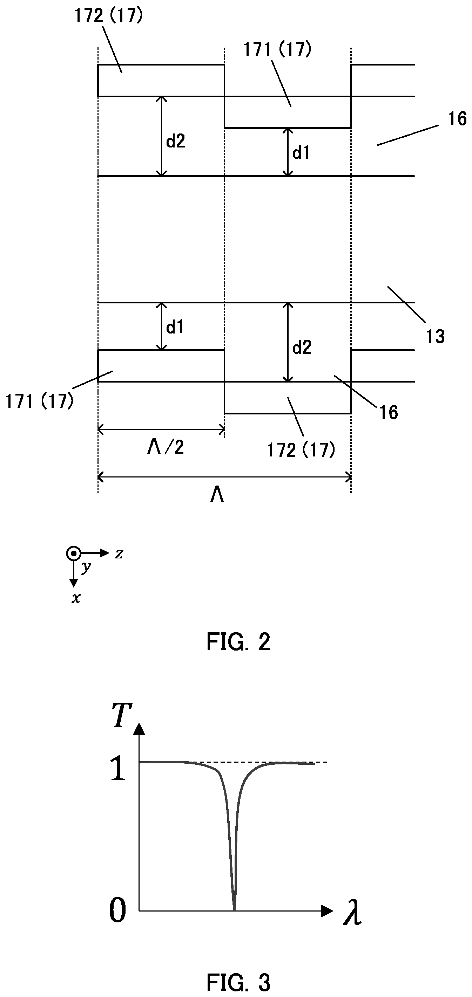

FIG. 2 is a partially enlarged view for describing the periodic structure of the satellite portion 17. As illustrated in FIG. 2, the distance from the core portion 13 to the satellite portion 17 disposed on both sides of the core portion 13 in the width direction is different in the first half and the second half of one period along the longitudinal direction.

In the example illustrated in FIG. 2, there are two types of distances d1 and d2 as the distance from the core portion 13 to the satellite portion 17. In the example illustrated in FIG. 2, the distance from the core portion 13 to one satellite portion 17 (the region 171) is denoted by d1, and the distance from the core portion 13 to the other satellite portion 17 (the region 172) is denoted by d2. In the example illustrated in FIG. 2, d1 < d2, but the present disclosure is not limited thereto.

With such a periodic structure, the satellite portion 17 can vary the waveguide mode of the light propagating through the multi-mode waveguide constituted by the core portion 13 and the cladding portion 16. The principle of varying the waveguide mode of the light propagating through the multi-mode waveguide by the satellite portion 17 will be described later.

In the example illustrated in FIG. 2, in the satellite portion 17, the region 171, which is close to the core portion 13, and the region 172, which is far from the core portion 13, are alternately disposed along the longitudinal direction, but the present disclosure is not limited thereto. For example, the satellite portion according to the present disclosure may have a meandering shape such that the distance from the core portion varies along the longitudinal direction.

The period A is expressed by Expression 1:
[1]

$$\Lambda = 2\pi/(\beta_0 - \beta_1) = \pi/\sqrt{\kappa^2 + \epsilon^2} \quad \dots \text{(Expression 1)}$$

where, $\beta_0$ is a propagation constant of the multi-mode waveguide in the zeroth-order mode, $\beta_1$ is a propagation constant of the multi-mode waveguide in the first-order mode, $\kappa$ is a coupling strength between the core portion 13 and the satellite portion 17, and $\epsilon$ is a value obtained by dividing a difference (propagation constant difference) between $\beta_0$ and $\beta_1$ by 2.

The propagation constant is determined by the effective refractive index for each waveguide mode. When the effective refractive index in the zeroth-order mode is $n_0$ and the effective refractive index in the first-order mode is $n_1$, the propagation constants $\beta_0$ and $\beta_1$ are expressed by Expression 2:
[2]

$$\beta_0 = (2\pi/\lambda)n_0$$

$$\beta_1 = (2\pi/\lambda)n_1 \qquad \dots \text{(Expression 2)}$$

where, $\lambda$ is the wavelength of light.

As shown in Expression 2, the propagation constant is determined by the wavelength of the light incident on the optical filter 10. Accordingly, the wavelength of the light handled by the optical filter 10 needs to be set in advance, and the size of the periodic structure of the satellite portion 17 in the optical filter 10 is determined based on the wavelength set in advance. In addition, the size (width and height) and the length (that is, the length of the multi-mode waveguide constituted by the core portion 13 and the cladding portion 16) of the core portion 13 are set to predetermined values, and the method for setting the values will be described later.

The behavior of the optical filter 10 having such a structure when specific light is incident will be described. The light input to the incident portion 11 is transitioned, in the tapered portion 12, to the zeroth-order mode of the multi-mode waveguide constituted by the core portion 13 and the cladding portion 16.

By the periodic structure of the satellite portion 17, the light of the target wavelength is modulated as the light propagates inside the core portion 13, and is transitioned to the first-order mode immediately before the terminal end portion of the core portion 13. The tapered portion 14 is configured to radiate (scatter) the light in the first-order mode, and no light emerges from the output portion 15. As a result, as illustrated in FIG. 3, the optical filter 10 operates as a notch filter that removes only the target wavelength. FIG. 3 is a diagram illustrating the characteristics of the optical filter 10 of Embodiment 1.

<Principle>

The principle in which the light propagating in the multi-mode waveguide constituted by the core portion 13 and the cladding portion 16 is transitioned from the zeroth-order mode to the first-order mode by the periodic structure of the satellite portion 17 will be described.

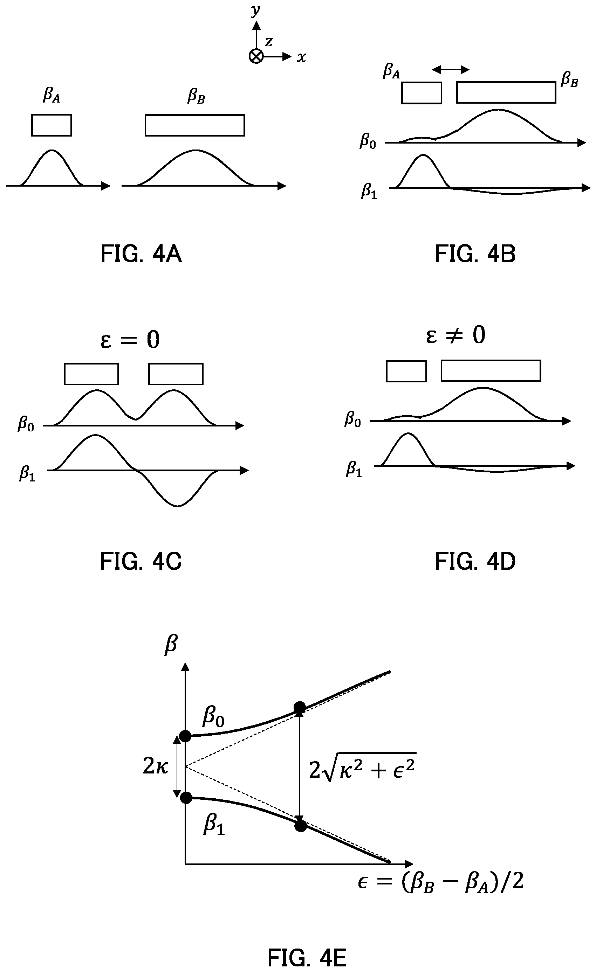

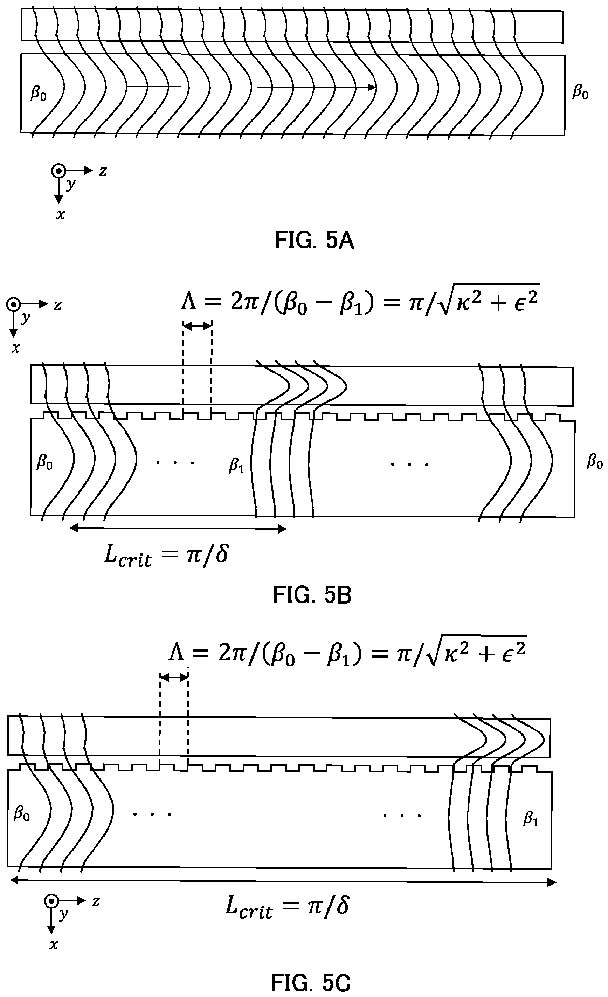

FIGS. 4 and 5 are diagrams for describing a Grating-Assisted Coupler, which is a known technique. As illustrated in FIG. 4A, two waveguides for which the propagation constants are represented by $\beta_A$ and $\beta_B$ are considered. The graph illustrated below each waveguide in FIG. 4A shows an example of the intensity distribution of light in each waveguide. When these waveguides are brought close to each other as illustrated in FIG. 4B, coupling occurs due to the overlap of the electric fields. The strength of this coupling is denoted by $\kappa$. Due to this coupling, as illustrated in FIG. 4B, the respective modes mix with each other, and two new eigenmodes $\beta_0$ and $\beta_1$ are generated. The graph in FIG. 4B shows an example of the intensity distribution of light in each of the two eigenmodes generated by the coupling.

Here, when the difference between propagation constants $\beta_A$ and $\beta_B$ is large, for example, when the difference is larger than the coupling strength $\kappa$, or when the coupling between the two waveguides is weak, the propagation constant of each eigenmode is close to the original mode $\beta_A$ or $\beta_B$.

A value obtained by dividing the difference between the propagation constants of the original two waveguides by 2 is denoted by $\varepsilon$ ($\varepsilon = (\beta_B - \beta_A)/2$). When $\varepsilon = 0$, that is, when the two waveguides have the same structure and the propagation constants are equal, as illustrated in FIG. 4C, the two new eigenmodes become a perfect symmetric mode or an antisymmetric mode. On the other hand, when $\varepsilon \neq 0$, that is, when the two waveguides have different structures and the propagation constants are different, as illustrated in FIG. 4D, the two new eigenmodes have distributions similar to the respective waveguides. FIG. 4E is a graph showing the relationship between the propagation constants $\beta_0$ and $\beta_1$ of the new eigenmodes and the difference $\varepsilon$ between the propagation constants of the original waveguides. $\beta_0$ corresponds to the zeroth-order mode (fundamental mode) in the multi-mode waveguide, and $\beta_1$ corresponds to the first-order mode.

As illustrated in FIG. 5A, when $\varepsilon \neq 0$, it is assumed that only the mode with $\beta_0$ among the two new eigenmodes is excited. FIG. 5A is a view of the two waveguides close to each other illustrated in FIG. 4B and the like as viewed from above. In FIG. 5A, the waveguide having a relatively narrow width is a waveguide having propagation constant $\beta_A$, and the waveguide having a relatively wide width is a waveguide having propagation constant $\beta_B$. In this case, the light corresponding to the mode with $\beta_0$ illustrated in FIG. 4D propagates to the right as it is.

Here, as illustrated in FIG. 5B, it is assumed that the structure of one waveguide varies at a predetermined period along the longitudinal direction. Specifically, for example, an uneven structure is formed along the longitudinal direction. The period A of the uneven structure (the sum of the lengths of the groove structure and the ridge structure) is set based on the difference between the propagation constants $\beta_0$ and $\beta_1$ as in the above-described Expression 1.

With such a structure, the light propagating through the waveguide is modulated by the periodic structure, and the mode can be transitioned from one mode ($\beta_0$) to the other mode ($\beta_1$) as the light propagates through the waveguide. Such a technique is a technique called a Grating Assisted Coupler (see: D. Marcuse, J. Lightwave Technol. LT-5 (2), 268-273 (1987). D. Marcuse, J. Lightwave Technol. LT-5 (2), 268-273 (1987)).

In the Grating Assisted Coupler, the period L$_{\text{crit}}$ for transitioning the mode is expressed by Expression 3:

$$L_{\text{crit}} = \pi/\delta \qquad \ldots \text{(Expression 3)}$$

where $\delta$ is a value indicating the degree of modulation of light by the periodic structure of the waveguide.

As illustrated in FIG. 5C, by setting the length of the waveguide to L$_{\text{crit}}$, the mode of the light incident at $\beta_0$ can be transitioned to $\beta_1$ at the time of emission.

The optical filter 10 described in Embodiment 1 has a length set to L$_{\text{crit}}$ (an integer multiple of L$_{\text{crit}}$). Accordingly, in the optical filter 10 according to Embodiment 1, the satellite portion 17 having a periodic structure is disposed on both sides of the multi-mode waveguide constituted by the core portion 13 and the cladding portion 16 in the width direction, thereby configuring a Grating Assisted coupler. This configuration enables zeroth-order mode light incident on the multi-mode waveguide to transition to the first-order mode upon emission. By providing the tapered portion 14 that radiates first-order mode light behind such a waveguide structure, the optical filter 10 can operate as a notch filter that removes only a specific wavelength, as described above.

<Temperature Dependence>

The optical filter 10 having the structure described above can match the refractive index variations across multiple waveguide modes for light of a specific wavelength $\lambda$, even when the temperature of each material constituting the waveguide varies due to the propagation of light or the like. In other words, the optical filter 10 can achieve temperature independence of the operating wavelength.

In the optical filter 10, in order to achieve temperature independence at a wavelength $\lambda$1, strictly, Expression 4 needs to be satisfied.

[3]

$$\frac{\partial n_{eq0}(\lambda,T)}{\partial T}\Big|_{\lambda=\lambda_0} - \frac{\partial n_{eq1}(\lambda,T)}{\partial T}\Big|_{\lambda=\lambda_0} = 0 \qquad \ldots \text{(Expression 4)}$$

$n_{eq0}(\lambda, T)$ represents the effective refractive index $n_0$ in the zeroth-order mode as a function of the wavelength $\lambda$ and the temperature T, and $n_{eq1}(\lambda, T)$ represents the effective refractive index $n_1$ in the first-order mode as a function of the wavelength $\lambda$ and the temperature T.

When the wavelength incident on the optical filter 10 is $\lambda_p$, the temperature dependence $\partial\lambda_p/\partial$T of the optical filter 10 at the wavelength $\lambda_p$ can be expressed by Expression 5:

[4]

$$\frac{\partial \lambda_p}{\partial T} \approx \frac{\lambda_p}{n_1 - n_0} \cdot \left(\frac{\partial n_1}{\partial T} - \frac{\partial n_0}{\partial T}\right) \qquad \ldots \text{(Expression 5)}$$

where $\partial n_0/\partial$T and $\partial n_1/\partial$T are referred to as temperature coefficients in the zeroth-order mode and the first-order mode, respectively.

Here, the desired temperature dependence of the optical filter 10 can be expressed by $10^{-4}$ [$\mu$m/K] in practice, and more desirably $3 \times 10^{-6}$ [$\mu$m/K]. In the case of $10^{-4}$, Expression 6 can be derived from Expression 5.

[5]

$$\left|\frac{\partial n_1}{\partial T} - \frac{\partial n_0}{\partial T}\right| < \frac{|n_1 - n_0|}{\lambda} \cdot 10^{-4} \qquad \ldots \text{(Expression 6)}$$

That is, it can be said that the temperature dependence of the optical filter 10 is achieved when the difference in the temperature coefficient between the zeroth-order mode and the first-order mode is sufficiently small with respect to the term obtained by dividing the difference in the effective refractive index between the zeroth-order mode and the first-order mode by the wavelength.

In the optical filter 10, the effective refractive index $n_{\text{eff}}$ in a certain waveguide mode can be expressed by Expression 7:

[6]

$$n_{eff} = W_1 \cdot n_{core} + W_2 \cdot n_{clad} + W_3 \cdot n_s \qquad \ldots \text{(Expression 7)}$$

where $n_{core}$ is the refractive index of the core portion 13, $n_{clad}$ is the refractive index of the cladding portion 16, and $n_s$ is the refractive index of the satellite portion 17. $W_1$, $W_2$, and $W_3$ are values respectively indicating the proportions of the optical intensity in the core portion 13, the cladding portion 16, and the satellite portion 17 with respect to the entire multi-mode waveguide.

Here, the proportion $W_3$ of the optical intensity in the satellite portion 17 is determined by the distance between the core portion 13 and the satellite portion 17. Specifically, as the distance between the core portion 13 and the satellite portion 17 decreases, $W_3$ increases, and the overall effective refractive index $n_{eff}$ also increases. On the other hand, as the distance between the core portion 13 and the satellite portion 17 increases, $W_3$ decreases, and the overall effective refractive index $n_{eff}$ also decreases. In this manner, by adjusting the distance between the core portion 13 and the satellite portion 17, the effective refractive index of the entire optical filter 10 in a certain waveguide mode can be varied.

<Examples>

An example of the optical filter having the structure described in Embodiment 1 above and the fact that the example can achieve temperature independence will be described. FIGS. 6A to 6D are diagrams for describing an example of the optical filter 10 of Embodiment 1.

FIG. 6A is a schematic top view of a waveguide structure of the optical filter 10 as an example. FIG. 6B is a schematic cross-sectional view of the waveguide structure of the optical filter 10 as an example, and shows a cross section taken along line B-B in FIG. 6A. In the example illustrated in FIG. 6A, the periodic structure of the satellite portion 17 is formed in a meandering structure. In addition, in the example illustrated in FIG. 6B, the core portion 13 and the satellite portion 17 are formed in a rib structure. In the example illustrated in FIGS. 6A to 6D, the core portion 13 and the satellite portion 17 are formed of silicon (Si), and the cladding portion 16 is formed of silicon dioxide ($SiO_2$).

In the example illustrated in FIGS. 6A and 6B, the period $L_{period}$ of the satellite portion 17 corresponding to the period A in FIG. 2 is 5.81 $\mu$m. The length $L_{device}$ of the multi-mode waveguide constituted by the core portion 13 and the cladding portion 16 is 1,970 $\mu$m. The width of the core portion 13 is 0.9 $\mu$m, and the width of the satellite portion 17 is 0.2 $\mu$m. The distance from the core portion 13 to one satellite portion 17 is 0.38 $\mu$m.

FIG. 6C is a graph showing a relationship between the wavelength of light incident on the optical filter 10 illustrated in FIGS. 6A and 6B and the spectrum of the optical filter 10. As shown in FIG. 6C, it is understood that, when the temperature of the optical filter 10 is changed, the shift direction of the spectrum differs depending on the wavelength. In the example illustrated in FIG. 6C, it is found that, when the temperature of the substrate is changed in a range of 10°C to 40°C, the temperature independence is achieved in the vicinity of the wavelength of 1.54 $\mu$m because the wavelength of the spectral dip does not change in the vicinity of 1.54 $\mu$m.

FIG. 6D is a graph showing a relationship between the temperature dependence ($\partial\lambda/\partial T$) of the wavelength and the wavelength. According to FIG. 6D, it is found that 3 pm/K (= $3 \times 10^{-6}$ $\mu$m/K) is achieved at a wavelength of 1.538 $\mu$m, and the desired temperature independence is achieved at the wavelength.

Note that, in the optical filter 10 according to Embodiment 1, the conditions required to achieve the temperature independence are not limited to the example illustrated in FIGS. 6A to 6D. The size (width and height) of each structure of the optical filter 10 is not limited to the size illustrated in FIGS. 6A and 6B, and may be set based on the wavelength to be used.

The example illustrated in FIGS. 6A to 6D is merely one example, and there are countless options for the size of each structure of the optical filter 10 to achieve the temperature independence in the present disclosure. FIGS. 7A to 7D are diagrams for describing a range in which the temperature independence of the optical filter 10 is achieved when the width w of the core portion 13 and the distance $w_g$ between the core portion 13 and the satellite portion 17 are changed. Note that, in the following description, the distance $w_g$ between the core portion 13 and the satellite portion 17 represents the average distance between the core portion 13 and the satellite portion 17 arranged in a zigzag structure.

FIGS. 7A and 7C are exemplary cross sections of the optical filter 10. In the example illustrated in FIG. 7A, the core portion 13 and the satellite portion 17 are formed in a rib structure, the height of the rib is 220 nm, and the height of the slab portion is 110 nm. In the example illustrated in FIG. 7A, the width of the satellite portion 17 is fixed to 0.2 $\mu$m. On the other hand, in the example illustrated in FIG. 7C, the width of the satellite portion 17 is fixed to 0.3 $\mu$m.

FIG. 7B shows a relationship between the width w of the core portion 13, the distance $w_g$ between the core portion 13 and the satellite portion 17, and the difference in temperature coefficient between the zeroth-order mode and the first-order mode ($\partial n_1/\partial T - \partial n_0/\partial T$) when the width of the satellite portion 17 is 0.2 $\mu$m. FIG. 7D shows a relationship between the width w of the core portion 13, the distance $w_g$ between the core portion 13 and the satellite portion 17, and the difference in temperature coefficient between the zeroth-order mode and the first-order mode ($\partial n_1/\partial T - \partial n_0/\partial T$) when the width of the satellite portion 17 is 0.3 $\mu$m. FIGS. 7B and 7D show that the closer the region is to white, the closer ($\partial n_1/\partial T - \partial n_0/\partial T$) is to 0, and by selecting w and $w_g$ corresponding to the region marked with a broken line, sufficient temperature independence of the optical filter 10 can be achieved.

In FIGS. 7A to 7D, an example of a case where the width w of the core portion 13 and the distance $w_g$ between the core portion 13 and the satellite portion 17 are selected has been described, but in addition to these, the width $w_p$ of the satellite portion 17, the height h of the core portion 13 and the satellite portion 17, the wavelength $\lambda$ of light, and the like may be selectable.

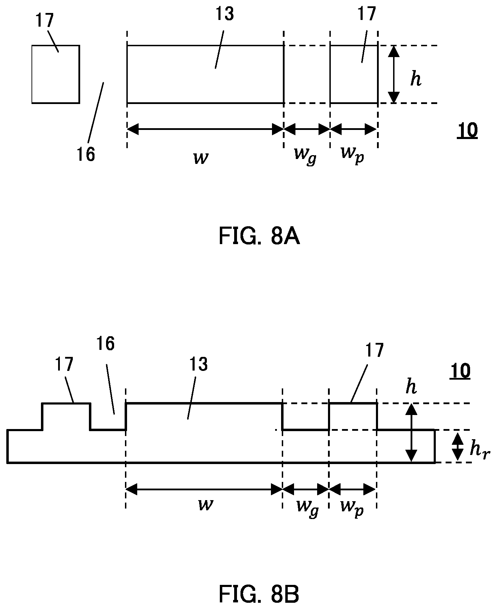

FIGS. 8A and 8B are diagrams for describing selectable elements among the structures of the optical filter 10 to achieve temperature independence. FIGS. 8A and 8B are cross-sectional views of the optical filter 10 including the core portion 13 and the satellite portion 17. FIG. 8A illustrates an example in which the core portion 13 and the satellite portion 17 have a channel-type structure as illustrated in FIG. 1B.

(Example 1)

In Example 1, in the channel structure illustrated in FIG. 8A, the wavelength of light incident on the optical filter 10 is set to around 1.55 $\mu$m. In this case, each selectable element is given by Expression 8.

$$w = 0.673 + \Delta w$$

$$w_g = 0.25 + \Delta w_g$$

$$w_p = 0.20 + \Delta w_p$$

$$h = 0.22 + \Delta h$$

$$\lambda = 1.55 + \Delta\lambda \qquad \text{... (Expression 8)}$$

The unit of the numerical values is $\mu$m. $\Delta w$, $\Delta w_g$, $\Delta w_p$, $\Delta h$, and $\Delta\lambda$ each indicate the deviation from the center value in each element.

A relationship expressed by Expression 9 is established between $\Delta w$, $\Delta w_g$, $\Delta w_p$, $\Delta h$, and $\Delta\lambda$.

[7]

$$\Delta w = \alpha\Delta w_p + \beta\Delta w_g + \gamma\Delta h + \delta_1\Delta\lambda + \delta_2(\Delta\lambda)^2 \qquad \text{... (Expression 9)}$$

It is desired that coefficients $\alpha$, $\beta$, $\gamma$, $\delta_1$, and $\delta_2$ in Expression 9 take, for example, numerical values shown in Expression 10.

$$\alpha = 0.211$$

$$\beta = -0.196$$

$$\gamma = -1.20$$

$$\delta_1 = 2.19$$

$$\delta_2 = 39.3 \qquad \text{... (Expression 10)}$$

Using Equations 8 to 10, it can be determined what values should be set for $\Delta w$, $\Delta w_g$, $\Delta w_p$, and $\Delta h$ depending on how much the wavelength to be filtered by the optical filter 10 deviates from 1.55 $\mu$m ($\Delta\lambda$).

Specifically, in Example 1, when $\Delta w$, $\Delta w_g$, $\Delta w_p$, $\Delta h$, and $\Delta\lambda$ are all 0, that is, when w = 0.673, $w_g$ = 0.25, $w_p$ = 0.20, h = 0.22, and $\lambda$ = 1.55 from Expression 8, the optical filter 10 can achieve temperature independence.

Next, a case where the width $w_p$ of the satellite portion 17 is set to 0.21 will be considered. In this case, $\Delta w_p$ = 0.01 from Expression 8. In this case, for example, when $\Delta w_g = \Delta h = \Delta\lambda = 0$, $\Delta w = \alpha\Delta w_p$ from Expression 9.

Therefore, when w = 0.673 + (0.211 × 0.01), $w_g$ = 0.25, $w_p$ = 0.21, h = 0.22, and $\lambda$ = 1.55, the optical filter 10 can achieve temperature independence.

Note that, in Example 1, as a result of the settings of $\Delta w$, $\Delta w_g$, $\Delta w_p$, $\Delta h$, and $\Delta\lambda$, it is desired that the values of w, $w_p$, $w_g$, h, and $\lambda$ be within the numerical ranges shown in Expression 11.

$$0.5 \leq w \leq 0.9$$

$$0.1 \leq w_p \leq 0.5$$

$$0.1 \leq w_g \leq 0.8$$

$$0.18 \leq h \leq 0.26$$

$$1.5 \leq \lambda \leq 1.6 \qquad \text{... (Expression 11)}$$

The numerical values included in Equations 8 to 11 are calculated by simulation to achieve the temperature independence of the optical filter 10. In the example illustrated in FIG. 8A, the cross-sectional shapes of the core portion 13 and the satellite portion 17 are substantially rectangular, and also in the simulation, the above numerical values are calculated assuming that the cross-sectional shapes of the core portion 13 and the satellite portion 17 are rectangular. In an actual manufacturing process, the cross-sectional shapes of the core portion 13 and the satellite portion 17 are likely to be trapezoidal with a longer lower side than upper side, and in this case, the side surfaces of the core portion 13 and the satellite portion 17 are tapered. When the cross-sectional shapes are trapezoidal as a result of actual manufacturing, this can be addressed by performing a simulation using parameters for a rectangular shape with the same cross-sectional area.

(Example 2)

In Example 2, in the channel structure illustrated in FIG. 8A, the wavelength of the light incident on the optical filter 10 is set to around 1.31 μm. In this case, each selectable element is given by Expression 12.

$$w = 0.541 + \Delta w$$

$$w_g = 0.25 + \Delta w_g$$

$$w_p = 0.20 + \Delta w_p$$

$$h = 0.22 + \Delta h$$

$$\lambda = 1.31 + \Delta \lambda \qquad \text{... (Expression 12)}$$

The unit of the numerical values is μm.

The point that the relationship expressed by Expression 9 is established between $\Delta w$, $\Delta w_g$, $\Delta w_p$, $\Delta h$, and $\Delta \lambda$ is the same as in Example 1.

It is desired that the coefficients $\alpha$, $\beta$, $\gamma$, $\delta_1$, and $\delta_2$ in Expression 9 take, for example, numerical values shown in Expression 13.

$$\alpha = 0.185$$

$$\beta = -0.294$$

$$\gamma = -627$$

$$\delta_1 = 2.12$$

$$\delta_2 = -17.2 \qquad \text{... (Expression 13)}$$

Using Equations 9, 12, and 13, it can be determined what values should be set for $\Delta w$, $\Delta w_g$, $\Delta w_p$, and $\Delta h$ depending on how much the wavelength to be filtered by the optical filter 10 deviates from 1.31 μm ($\Delta \lambda$).

Note that, in Example 2, it is desired that the values of w, $w_p$, $w_g$, h, and $\lambda$ be within the numerical ranges shown in

Expression 14.

$$0.3 \leq w \leq 0.8$$

$$0.1 \leq w_p \leq 0.5$$

$$0.1 \leq w_g \leq 0.8$$

$$0.18 \leq h \leq 0.26$$

$$1.26 \leq \lambda \leq 1.36 \qquad ... \text{(Expression 14)}$$

Next, FIG. 8B illustrates an example in which the core portion 13 and the satellite portion 17 have a rib-type structure. In this case, the height $h_r$ of the slab structure is further added as a selectable element.

(Example 3)

In Example 3, in the rib structure illustrated in FIG. 8B, the wavelength of the light incident on the optical filter 10 is set to around 1.55 $\mu$m. In this case, each selectable element is given by Expression 15.

$$w = 0.862 + \Delta w$$

$$w_g = 0.48 + \Delta w_g$$

$$w_p = 0.20 + \Delta w_p$$

$$h = 0.22 + \Delta h$$

$$h_r = 0.11 + \Delta h_r$$

$$\lambda = 1.55 + \Delta \lambda \qquad ... \text{(Expression 15)}$$

The unit of the numerical values is $\mu$m. $\Delta h_r$ indicates a deviation from the center value in the height of the slab structure.

A relationship expressed by Expression 16 is established between $\Delta w$, $\Delta w_g$, $\Delta w_p$, $\Delta h$, $\Delta h_r$, and $\Delta \lambda$.

[8]

$$\Delta w = \alpha \Delta w_p + \beta \Delta w_g + \gamma \Delta h + \delta_1 \Delta \lambda + \delta_2 (\Delta \lambda)^2 + \epsilon \Delta h_r \qquad ... \text{(Expression 16)}$$

It is desired that coefficients $\alpha$, $\beta$, $\gamma$, $\delta_1$, $\delta_2$, and $\epsilon$ in Expression 16 take, for example, numerical values shown in Expression 17.

$$\alpha = 0.368$$

$$\beta = -0.198$$

$$\gamma = -2.98$$

$$\delta_1 = 3.56$$

$$\delta_2 = 98.6$$

$$\varepsilon = 3.78 \qquad ... \text{(Expression 17)}$$

Using Equations 15 to 17, it can be determined what values should be set for $\Delta w$, $\Delta w_g$, $\Delta w_p$, $\Delta h$, and $\Delta h_r$ depending on how much the wavelength to be filtered by the optical filter 10 deviates from 1.55 $\mu$m ($\Delta\lambda$).

Note that, in Example 1, it is desired that the values of w, $w_p$, $w_g$, h, $h_r$, and $\lambda$ be within the numerical ranges shown in Expression 18.

$$0.6 \le w \le 1.1$$

$$0.1 \le w_p \le 0.5$$

$$0.1 \le w_g \le 0.8$$

$$0.18 \le h \le 0.26$$

$$0.08 \le h_r \le 0.14$$

$$1.5 \le \lambda \le 1.6 \qquad ... \text{(Expression 18)}$$

(Example 4)

In Example 4, in the channel structure illustrated in FIG. 8B, the wavelength of the light incident on the optical filter 10 is set to around 1.31 $\mu$m. In this case, each selectable element is given by Expression 19.

$$w = 0.716 + \Delta w$$

$$w_g = 0.48 + \Delta w_g$$

$$w_p = 0.20 + \Delta w_p$$

$$h = 0.22 + \Delta h$$

$$h_r = 0.11 + \Delta h_r$$

$$\lambda = 1.31 + \Delta\lambda \qquad ... \text{(Expression 19)}$$

The unit of the numerical values is $\mu$m.

The point that the relationship expressed by Expression 16 is established between $\Delta w$, $\Delta w_g$, $\Delta w_p$, $\Delta h$, $\Delta h_r$, and $\Delta\lambda$ is the same as in Example 3.

It is desired that the coefficients $\alpha$, $\beta$, $\gamma$, $\delta_1$, and $\delta_2$ in Expression 16 take, for example, numerical values shown in Expression 20.

$$\alpha = 0.527$$

$$\beta = -0.173$$

$$\gamma = -2.13$$

$$\delta_1 = 0.328$$

$$\delta_2 = -34.1$$

$$\varepsilon = 3.25 \qquad \text{... (Expression 20)}$$

Using Equations 16, 19, and 20, it can be determined what values should be set for $\Delta w$, $\Delta w_g$, $\Delta w_p$, $\Delta h$, and $\Delta h_r$ depending on how much the wavelength to be filtered by the optical filter 10 deviates from 1.31 $\mu$m ($\Delta\lambda$).

In Example 2, it is desired that the values of w, $w_p$, $w_g$, h, $h_r$, and $\lambda$ be within the numerical ranges shown in Expression 21.

$$0.5 \leq w \leq 1.0$$

$$0.1 \leq w_p \leq 0.5$$

$$0.1 \leq w_g \leq 0.8$$

$$0.18 \leq h \leq 0.26$$

$$0.08 \leq h_r \leq 0.14$$

$$1.26 \leq \lambda \leq 1.36 \qquad \text{... (Expression 21)}$$

Note that the size of each configuration of the optical filter 10 according to the present disclosure is not limited to Examples 1 to 4 described in relation to FIGS. 8A and 8B, and may be appropriately set within a range in which temperature independence can be achieved based on the target wavelength.

[Actions and Effects]

The operation and effect of the optical filter 10 described in Embodiment 1 of the present disclosure will be described.

The optical filter 10 has a structure in which the core portion 13 extending along the longitudinal direction and the satellite portion 17 extending along the longitudinal direction on both sides of the core portion 13 are covered with the cladding portion 16. The satellite portion 17 is disposed at a position where the position of the satellite portion 17 periodically varies along the longitudinal direction such that the distance between the core portion 13 and the satellite portion 17 periodically varies at a period set based on the propagation constants of the two waveguide modes (zeroth-order mode and first-order mode) propagated by the multi-mode waveguide. In addition to this configuration, the satellite portion 17 has a cross section smaller than a cross-sectional size capable of propagating light in a single mode.

With such a configuration, the effective refractive index of the multi-mode waveguide constituted by the core portion 13 and the cladding portion 16 periodically varies by the periodic structure of the satellite portion 17. As a result, the optical filter 10 can cause mode transition of light as the light propagates through the multi-mode waveguide after being incident on the multi-mode waveguide. By appropriately adjusting the length of the multi-mode waveguide, for example, light incident in the zeroth-order mode can be transitioned to light in the first-order mode at the time of emission.

By disposing tapered portion 14 that radiates light in the first-order mode behind such a multi-mode waveguide structure, the optical filter 10 operates as a single-peak filter (notch filter) that removes light in the first-order mode.

In the optical filter 10, since light in two waveguide modes propagates in one core portion 13, the coupling between the two waveguide modes can be made relatively strong. Therefore, the device length can be shortened as compared with a waveguide structure using the conventional Grating-Assisted Coupler. Accordingly, high integration can be realized.

In addition, in the optical filter 10 having the above-described structure, by adjusting parameters such as the size (width and height) of the cross section of the core portion 13, the size of the satellite portion 17, and the distance between the core portion 13 and the satellite portion 17, the difference in temperature dependence (temperature coefficient) of the multi-mode waveguide for the zeroth-order mode and the first-order mode can be made substantially zero. As a result, the temperature independence of the optical filter with respect to a specific wavelength can be achieved.

(Variation of Embodiment 1)

Hereinafter, variations of Embodiment 1 will be described.

In Embodiment 1, the satellite portion 17 disposed on both sides along the longitudinal direction of the core portion 13 has a periodic structure. With such a structure, the refractive index of the multi-mode waveguide constituted by the core portion 13 and the cladding portion 16 periodically varies, and thus the mode of the light incident on the multi-mode waveguide can be varied to another mode at the time of emission. As a result, the optical filter 10 has a function as a notch filter that removes light of a specific wavelength.

In the present invention, the satellite portion need not necessarily have a periodic structure in the longitudinal direction. The optical filter according to the present invention may have a multi-mode waveguide and a satellite structure, and may realize a periodic variation in the refractive index of the multi-mode waveguide using, for example, an EO effect, a TO effect, a mechanical effect, a nonlinear effect, or the like.

(Variation 1)

An electro-optic (EO) effect is an effect in which the refractive index varies when a voltage is applied to a substance. As an example of a case where the EO effect is applied to the optical filter according to the present disclosure, for example, the following example is conceivable.

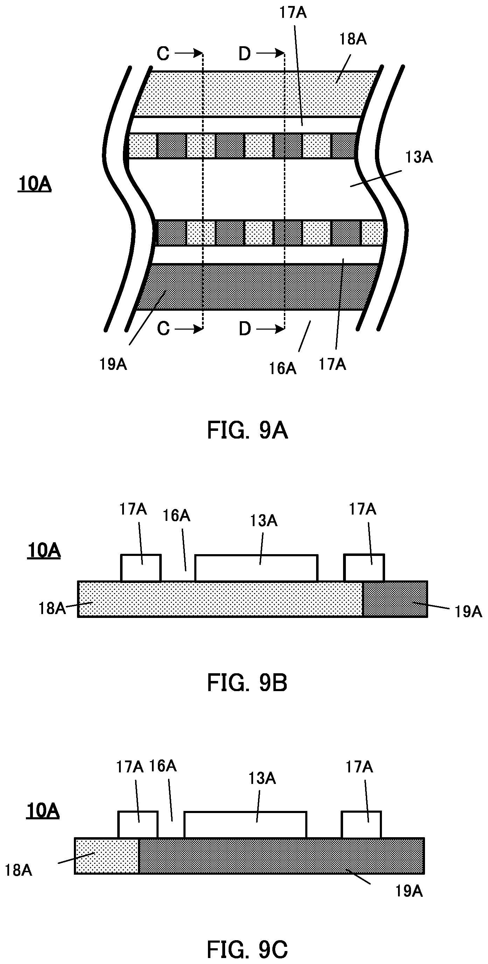

FIGS. 9A to 9C are diagrams illustrating Variation 1 of the optical filter using an EO effect. FIG. 9A is a schematic top view. FIG. 9B is a cross-sectional view taken along line C-C in FIG. 9A. FIG. 9C is a cross-sectional view taken along line D-D in FIG. 9A. As illustrated in FIG. 9A, the optical filter 10A of Variation 1 is the same as that of Embodiment 1 in that the satellite portion 17A is disposed along the longitudinal direction of the core portion 13A. However, the satellite portion 17A is disposed in a linear shape and does not have a zigzag structure.

The optical filter 10A includes an n-type semiconductor structure 18A and a p-type semiconductor structure 19A. The n-type semiconductor structure 18A and the p-type semiconductor structure 19A each have a comb shape, and the comb shapes are disposed to mesh with each other and to be bonded to each other. In addition, the n-type semiconductor structure 18A and the p-type semiconductor structure 19A are disposed to be in contact with the core portion 13A and the satellite portion 17A. As a result, the position of the pn junction is configured to periodically vary along the longitudinal direction as illustrated in FIGS. 9B and 9C. The period in which the position of the pn junction varies is set to the period expressed by the above Expression 1.

An electrode is connected to each of the n-type semiconductor structure 18A and the p-type semiconductor structure 19A. When a forward bias voltage or a reverse bias voltage is applied to the n-type semiconductor structure 18A and the p-type semiconductor structure 19A via the electrodes, the width of the depletion layer in which electrons or holes are absent varies, and the carrier density at the pn junction portion can be controlled. As a result, the refractive index of the multi-mode waveguide constituted by the core portion 13A and the cladding portion 16A can be varied.

(Variation 2)

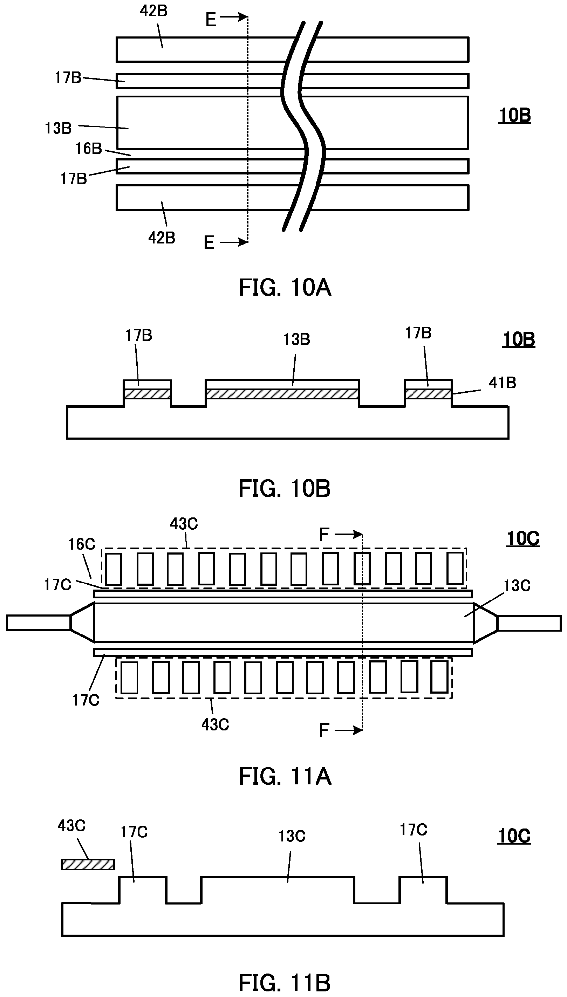

FIGS. 10A and 10B are diagrams illustrating Variation 2 of the optical filter using the EO effect. FIG. 10A is a schematic top view. FIG. 10B is a cross-sectional view taken along line E-E in FIG. 10A.

In the optical filter 10B of Variation 2, a quantum well layer 41B is formed in the core portion 13B and the satellite portion 17B. RF electrodes 42B are disposed on both outer sides of the satellite portions 17B as viewed from the core portion 13B along the longitudinal direction. An AC power supply is connected to each of the RF electrodes 42B. The quantum well layer 41B is formed on a substrate such as GaAs.

When an AC voltage is applied to each of the RF electrodes 42B, a standing electric field distribution is generated between the RF electrodes 42B. The distribution of the two-dimensional electron gas (2DEG) in the quantum well layer 41B is modulated by the electric potential formed by the electric field. As a result, the refractive index of the multi-mode waveguide constituted by the core portion 13B and the cladding portion 16B can be periodically varied. In Variation 2, it is possible to control the period of varying the refractive index by the frequency of the AC voltage applied to the RF electrodes 42B.

(Variation 3)

The optical filter 10C of Variation 3 utilizes a TO effect. FIGS. 11A and 11B are diagrams illustrating Variation 3 of the optical filter using a TO effect. FIG. 11A is a schematic top view. FIG. 11B is a cross-sectional view taken along line F-F in FIG. 11A. Specifically, thin-film heaters 43C are periodically disposed on the substrate on the outer sides of the satellite portions 17C disposed along the longitudinal direction of the core portion 13C or in the cladding portion 16C. As a result, the refractive index of the multi-mode waveguide can be periodically varied by generating a temperature distribution corresponding to the amount of heating of the thin-film heaters 43C on the multi-mode waveguide.

(Variation 4)

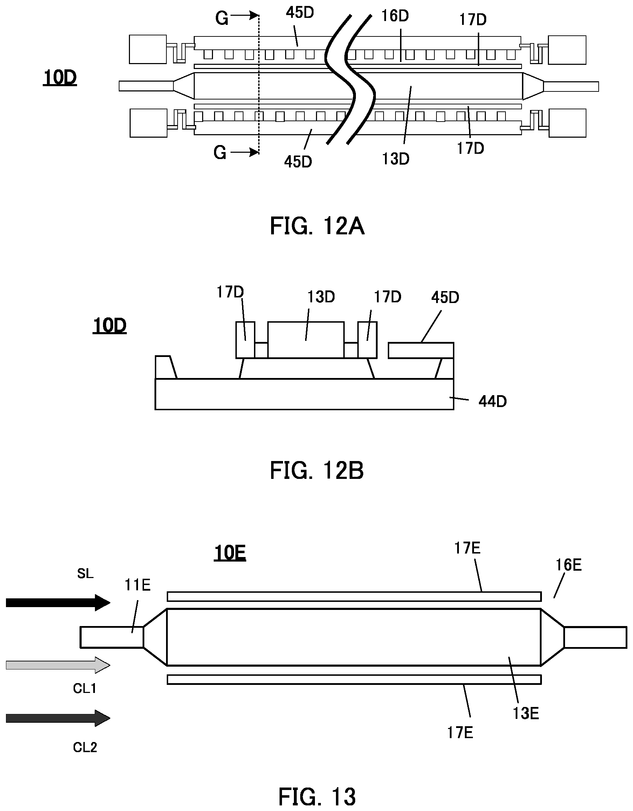

FIGS. 12A and 12B are diagrams illustrating Variation 4 of the optical filter using a mechanical effect. FIG. 12A is a schematic top view. FIG. 12B is a cross-sectional view taken along line G-G in FIG. 12A.
In the optical filter 10D of Variation 4, the core portion 13D, the cladding portion 16D, and the satellite portion 17D are fixed to the substrate, and a movable beam 45D is supported on the substrate 44D via a spring. The movable beam 45D can be moved in a direction approaching or separating from the multi-mode waveguide by an actuator (not shown) or the like. The refractive index of the multi-mode waveguide can be varied according to the position where the movable beam 45D is moved.

(Variation 5)

FIG. 13 is a diagram illustrating Variation 5 of the optical filter using an optical nonlinear effect. In the optical filter 10E of Variation 5, two optical waves of control light CL having a wavelength different from that of signal light SL are input to the incident portion 11E in a waveguide mode different from the waveguide mode in which the signal light SL propagates. The propagation constants of the two control lights CL1 and CL2 are set to be slightly different from each other. Due to the propagation constant difference, the two control lights CL1 and CL2 interfere with each other, and the intensity of the control light CL propagated through the multi-mode waveguide periodically varies.
As a result, an optical nonlinear effect called an optical Kerr effect occurs, and thus the refractive index of the multi-mode waveguide can be periodically varied according to the intensity of light in the multi-mode waveguide constituted by the core portion 13E and the cladding portion 16E.
In Variations 1 to 5, examples have been described in which the optical filters 10A, 10B, 10C, 10D, and 10E periodically vary the refractive index of the multi-mode waveguide by the EO effect, the TO effect, the mechanical effect, the optical nonlinear effect, and the like. In such variations, the amount of refractive index variation can be controlled by controlling the parameters according to the configuration.
In this case, the optical filters 10A, 10B, 10C, 10D, and 10E can be used as modulators. The modulator realized by the present disclosure has the characteristics of the optical filter of the present disclosure as they are, and thus has a specific wavelength filter shape and can achieve temperature independence.
As a modulation method of the modulator, a first modulation method of controlling the amount of refractive index variation and a second modulation method of controlling the period of refractive index variation can be considered. In the first modulation method, the transmittance can be varied without varying the center wavelength of the filter by control. In the second modulation method, the center wavelength of the filter is varied by control.
In addition, in the optical filters 10A, 10B, 10C, 10D, and 10E of Variations 1 to 5, the refractive index is periodically varied by the EO effect, the TO effect, the mechanical effect, the optical nonlinear effect, and the like, and thus the satellite portion does not have a periodic structure. In this case, the satellite portion is provided to achieve the temperature independence of the optical filters 10A, 10B, 10C, 10D, and 10E by adjusting the size thereof or the distance from the core portion.

(Variation 6)

In the optical filter 10 described in Embodiment 1 described above, as illustrated in FIG. 1A and the like, two satellite portions 17 are disposed on both sides of the core portion 13 such that the distance between the satellite portions 17 is substantially constant (mirror-antisymmetric shape) even in different periods.
When the symmetry is different between the two modes (zeroth-order mode and first-order mode) used in the multi-mode waveguide constituted by the core portion 13 and the cladding portion 16, such a structure can cause periodical refractive index variation in the multi-mode waveguide.
On the other hand, when the symmetry of the two modes is the same, the satellite portions on both sides of the core portion may be disposed in a mirror-symmetric shape.

(Variation 7)

In the optical filter 10 described in Embodiment 1 described above, as illustrated in FIG. 1A and the like, the position (distance) of the satellite portion 17 with respect to the core portion 13 is periodically varied to cause periodical variation in the refractive index in the multi-mode waveguide.

As a variation of such, instead of periodically varying the position of the satellite portion, an optical filter including a core portion whose side surfaces have uneven shapes when viewed from above may be formed. In such an optical filter of Variation 7, the distance between the core portion and the satellite portion periodically varies.

(Variation 8)

When a waveguide structure is produced with silicon, it is known that the refractive index during use can be adjusted by implanting ions into the waveguide during production and annealing the portion at a high temperature during use (see: J. J. Ackert, et al., Optics Express 19(13), 11969 (2011)). This technique may be applied to the optical filter 10 of Embodiment 1, and configured such that the effective refractive index of the entire optical filter 10 can be adjusted by implanting ions into the satellite portion 17 during production and making the satellite portion at a high temperature during use.

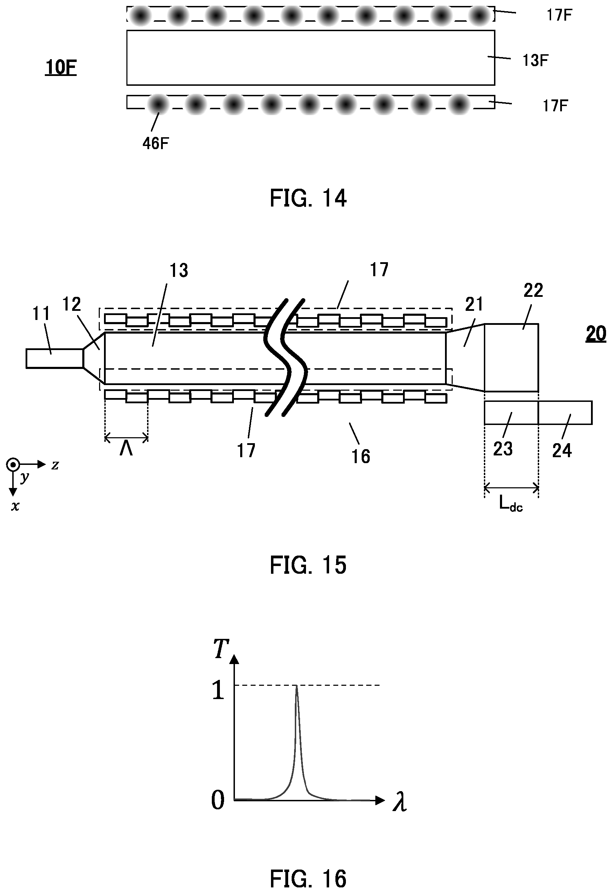

FIG. 14 is a diagram illustrating Variation 8 of the optical filter in which the refractive index can be adjusted by ion implantation. In the optical filter 10F of Variation 8, ion implantation regions 46F are periodically provided in the satellite portion 17F provided on both sides of the core portion 13F. By heating the satellite portion 17F to a high temperature during calibration before use, the refractive index of the satellite portion 17F, and thus the effective refractive index of the entire optical filter 10F, can be arbitrarily adjusted. With such a configuration, the effective refractive index of the optical filter 10F can be adjusted after the production of the optical filter 10F. Therefore, the production accuracy of the optical filter 10F can be relaxed, and the production cost and design cost of the optical filter 10F can be significantly reduced.

In addition, the ion implantation regions 46F possibly absorb light. However, in the optical filter 10F, the satellite portion 17F does not guide light. Therefore, it is possible to avoid a situation in which light is absorbed by the ion implantation regions 46F provided in the satellite portion 17F, and the intensity of light propagated by the optical filter 10F is reduced.

(Variation 9)

In Embodiment 1 described above, as illustrated in FIG. 1A, the terminal end portion of the satellite portion 17 is formed parallel to the longitudinal direction. The optical filter according to the present disclosure is not limited thereto, and the optical filter according to the present disclosure may have a satellite portion in which the terminal end portion is bent or widened in a direction opposite to the core portion 13 in the width direction.

This makes it possible to prevent light scattering at the end portion of the satellite portion 17.

<Embodiment 2>

In Embodiment 2 described below, an optical filter 20 as a band-pass filter that extracts only light having a specific wavelength will be described. The optical filter 20 has a terminal end portion structure different from that of the optical filter 10 according to Embodiment 1 described above.

In the following description, the same reference numerals may be assigned to the same components as those in Embodiment 1, and the description thereof may be omitted.

FIG. 15 is a diagram for describing a structure of the optical filter 20 according to Embodiment 2. As illustrated in FIG. 15, the optical filter 20 includes an incident portion 11, a tapered portion 12, a core portion 13, a cladding portion 16, a satellite portion 17, a tapered portion 21, waveguides 22 and 23, and an output portion 24.

As illustrated in FIG. 15, the optical filter 20 has the same structure as that of the optical filter 10 according to Embodiment 1 from the incident portion 11 to the terminal end portion of the core portion 13.

The tapered portion 21 connects the terminal end portion of the core portion 13 and the waveguide 22. The waveguide 22 is formed to have a width wider than that of the core portion 13. Therefore, the tapered portion 21 has a tapered shape that widens from the terminal end portion of the core portion 13 to the starting end portion of the waveguide 22. In FIG. 15, the length of the tapered portion 21 is illustrated to be relatively short as compared with other configurations, but in practice, the tapered portion 21 may be formed to be long in order to prevent interference with the terminal end portion of the satellite portion 17, for example.

The waveguides 22 and 23 are disposed close to each other and in parallel along the longitudinal direction. As a result, the waveguides 22 and 23 constitute a directional coupler. The propagation constant of the first-order mode of the waveguide 22 and the propagation constant of the zeroth-order mode of the waveguide 23 are set to the same value. The length $L_{dc}$ of the waveguides 22 and 23 is set to the complete coupling length.

The waveguide 22 is formed to have a width wider than that of the core portion 13, and constitutes a multi-mode waveguide with the surrounding cladding portion 16. The waveguide 22 has a zeroth-order mode and a first-order mode.

On the other hand, the waveguide 23 is formed to have a width narrower than that of the waveguide 22, and is a single-mode waveguide having only a first-order mode.

In this case, the first-order mode of the waveguide 22 and the zeroth-order mode of the waveguide 23 are coupled, and the light of the first-order mode propagating through the waveguide 22 can be extracted to the waveguide 23. The light of the zeroth-order mode propagating through the waveguide 22 is not coupled to the waveguide 23, and is radiated (scattered) from, for example, the terminal end portion of the waveguide 22.

As a result, only the light of the first-order mode is emitted from the output portion 24. FIG. 16 is a diagram illustrating characteristics of the optical filter 20 according to Embodiment 2. As illustrated in FIG. 16, the optical filter 20 functions as a band-pass filter that extracts only specific light.

In the optical filter 20 according to Embodiment 2, a structure may be adopted in which the end portions of the waveguides 22 and 23 are bent or widened to suppress scattering of light. In addition, the same structure as the tapered portion 14 and the output portion 15 in Embodiment 1 may be added to the terminal end portion of the waveguide 23, and the light of the zeroth-order mode may be extracted from the waveguide 23.

In the example illustrated in FIG. 15, the waveguide 23 is provided only on one side of the waveguide 22, but the same waveguide as the waveguide 23 may be provided on the other side.

For example, when the width of the waveguide 22 is 1.19 $\mu$m, the width of the waveguide 23 is 0.43 $\mu$m, and the distance between the waveguide 22 and the waveguide 23 is 0.25 $\mu$m, the complete coupling length at which the total energy of the light in the first-order mode of the waveguide 22 can be extracted from the waveguide 23 is 13.8 $\mu$m.

In the example illustrated in FIG. 15, both the waveguides 22 and 23 have a structure in which the width does not change along the longitudinal direction, but for example, any one of the waveguides 22 and 23 may be formed in a tapered shape.

In the optical filter 20 according to Embodiment 2, as in the optical filter 10 according to Embodiment 1, the temperature independence of the optical filter 20 can be achieved by adjusting the size of the core portion 13, the size of the satellite portion 17, the distance between the core portion 13 and the satellite portion 17, and the like.

<Embodiment 3>

In Embodiment 3, an optical filter 30 having a structure different from the structures of Embodiments 1 and 2 will be described.

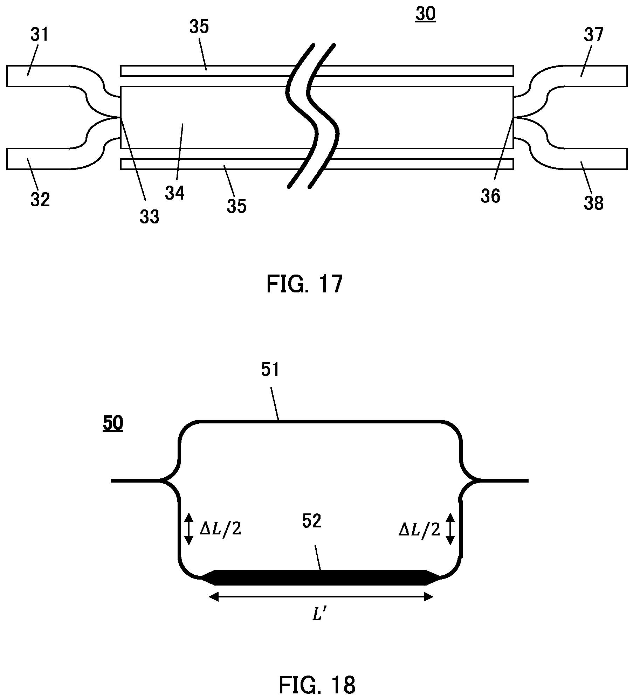

FIG. 17 is a diagram for describing the structure of an optical filter 30 according to Embodiment 3, and is a schematic top view. As illustrated in FIG. 17, the optical filter 30 includes a first incident portion 31, a second incident portion 32, a Y-branch 33, a core portion 34, a satellite portion 35, a Y-branch 36, a first output portion 37, a second output portion 38, and a cladding portion 39.

The first incident portion 31, the second incident portion 32, the Y-branch 33, the core portion 34, the satellite portion 35, the Y-branch 36, the first output portion 37, and the second output portion 38 are covered with the cladding portion 39. The first incident portion 31, the second incident portion 32, the first output portion 37, and the second output portion 38 constitute a single-mode waveguide together with the cladding portion 39. The core portion 34 constitutes a multi-mode waveguide together with the cladding portion 39.

As described above, the optical filter 30 includes two incident portions and two output portions, and a multi-mode waveguide is provided therebetween. The optical filter 30 having such a structure functions as a periodic filter having a property in which the transmittance varies periodically with respect to the wavelength.

Hereinafter, a principle in which the optical filter 30 according to Embodiment 3 functions as a periodic filter will be described.

<Principle>

In general, an interferometer called a Mach-Zehnder interferometer is known, which splits light from a single light source into two parallel light beams and measures the phase difference between the parallel light beams.

FIG. 18 is a schematic top view showing an example of a Mach-Zehnder interferometer in which incident light is split into two arms and then combined. In the Mach-Zehnder interferometer 50 illustrated in FIG. 18, a second arm 52 is formed to be longer than a first arm 51. In addition, in the example illustrated in FIG. 18, the second arm 52 has a region that is formed to be thicker than the first arm 51. The Mach-Zehnder interferometer 50 having such an asymmetric structure may be referred to as an asymmetric Mach-Zehnder interferometer (AZMI).

When the difference in length between the first arm 51 and the second arm 52 is $\Delta$L and the length of a region of the second arm 52 that is thicker than first arm 51 is L', the temperature dependence of the M-th order mode wavelength is expressed by Expression 22.

[9]

$$\frac{\partial \lambda}{\partial T} = \frac{\Delta L \partial n_{\text{eff}}(W_0)}{M} \frac{}{\partial T} + \frac{L' \partial \Delta n_{\text{eff}}}{M} \frac{}{\partial T} \qquad \dots \text{(Expression 22)}$$

In such a conventional AMZI, the first arm 51 and the second arm 52 are disposed to be physically separated from each other. Thus, when the temperature at a certain location changes, an influence on the first arm 51 and an influence on the second arm 52 may be different. That is, in the conventional AMZI, it is difficult to achieve temperature independence with respect to a local temperature change.

Here, the optical filter 30 according to Embodiment 3 illustrated in FIG. 17 realizes the same performance as the AZMI in which two arms are brought close to each other by bringing the two arms close to each other and causing the core portion 34 to behave as a single-core multi-mode waveguide. In the optical filter 30 according to Embodiment 3, since the two arms are not disposed to be physically separated from each other, for example, even when a local temperature change occurs in a part of the core portion 34, a temperature difference between the two arms does not substantially occur. As a result, it is possible to provide the optical filter 30 that is robust against a local temperature change.

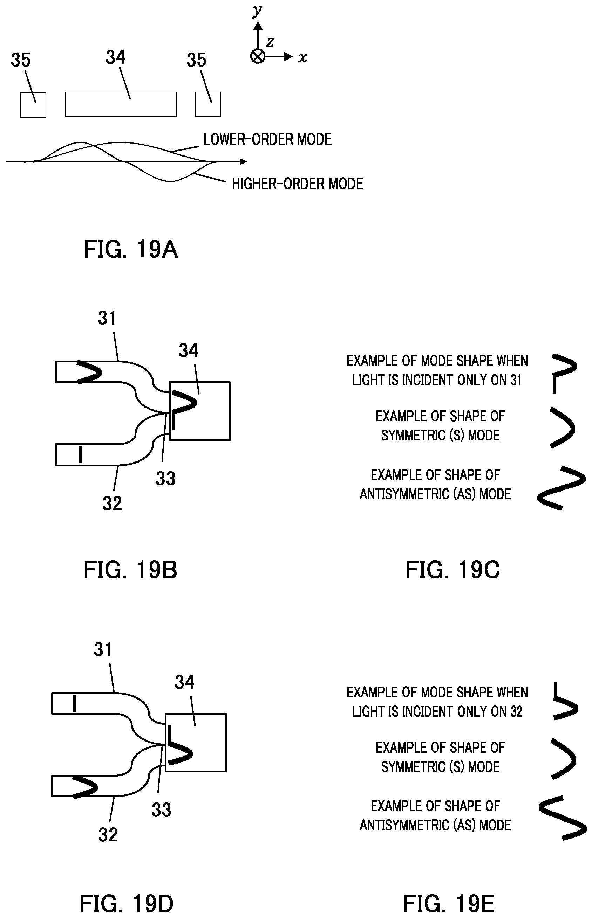

FIGS. 19A to 19E are diagrams for describing a principle in which the optical filter 30 according to Embodiment 3 behaves as AZMI. FIG. 19A is a schematic cross-sectional view of the optical filter 30 in a plane perpendicular to the longitudinal direction. FIG. 19B schematically illustrates a mode shape when light is incident only from the first incident portion 31. FIG. 19C illustrates examples of a mode shape when light is incident only from the first incident portion 31 and shapes in a symmetric mode and an antisymmetric mode. FIG. 19D schematically illustrates a mode shape when light is incident only from the second incident portion 32. FIG. 19E illustrates examples of a mode shape when light is incident only from the second incident portion 32 and shapes in a symmetric mode and an antisymmetric mode.

FIG. 19A illustrates the core portion 34 and the satellite portion 35 in a cross section. In FIG. 19A, the graph shown below the core portion 34 and the satellite portion 35 shows an example of an intensity distribution of light. As illustrated in FIG. 19A, by disposing the satellite portion 35 on both sides of the core portion 34, a lower-order mode and a higher-order mode can be utilized in a single core.

When light is incident only from the first incident portion 31, the mode shape in the Y-branch 33 becomes a shape illustrated in FIG. 19B. This shape is close to a shape obtained by adding a symmetric (S) mode and an antisymmetric (AS) mode in the same phase, as illustrated in FIG. 19C.

On the other hand, when light is incident only from the second incident portion 32, the mode shape in the Y-branch 33 becomes a shape illustrated in FIG. 19D. This shape is close to a shape obtained by adding a symmetric (S) mode and an antisymmetric (AS) mode in opposite phases, as illustrated in FIG. 19E.

With such a configuration, the behavior when light is incident on the optical filter 30 is as follows. For example, when light is incident only from the first incident portion 31, light in both the S mode and the AS mode is propagated by the core portion 34. At this time, the phase difference between the S mode and the AS mode of the light that has reached the Y-branch 36 at the terminal end portion of the core portion 34 varies depending on the wavelength of the incident light.

When the length of the core portion 34 is $L_{\text{core}}$, the phase of the S mode in the Y-branch 36 can be expressed by $\beta_S \times L_{\text{core}}$, and the phase of the AS mode can be expressed by $\beta_{AS} \times L_{\text{core}}$. Here, $\beta_S$ is a propagation constant of the S mode, and $\beta_{AS}$ is a propagation constant of the AS mode.

By setting the length of $L_{\text{core}}$ using Expression 23, the S mode and the AS mode can be made to have the same phase in the Y-branch 36.

$$L_{\text{core}} = 2\pi \cdot m/(\beta_S - \beta_{AS}) \qquad \dots \text{(Expression 23)}$$

Here, m is an integer.

In the Y-branch 36, when the S mode and the AS mode have the same phase, light advances to the first output portion 37 and is emitted. In addition, in the Y-branch 36, when the S mode and the AS mode have opposite phases, light advances to the second output portion 38 and is emitted. Therefore, the output portion from which light is output varies depending on the wavelength of the incident light. Accordingly, a periodic wavelength filter is realized.

Note that, in the optical filter 30 according to Embodiment 3, when the effective refractive indices in the S mode and the AS mode are $n_0$ and $n_1$, respectively, the temperature independence of the optical filter 30 can be achieved by adjusting the size of each configuration and the distance between the configurations such that Expression 5 and Expression 6 are satisfied, as in the optical filter 10 according to Embodiment 1.

In the optical filter according to Embodiment 3, the phase difference between the two modes can be controlled by the EO effect, the TO effect, the mechanical effect, or the optical nonlinear effect. Since the configurations of the variations using the EO effect, the TO effect, the mechanical effect, and the optical nonlinear effect are substantially the same as Variations 1 to 5 described in Embodiment 1, the description thereof will be omitted.

<Embodiment 4>

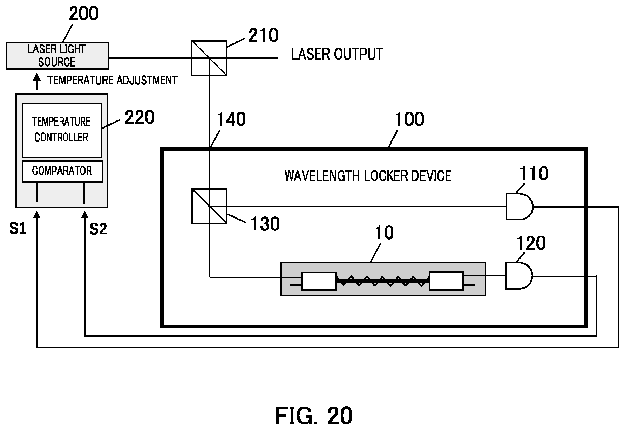

A wavelength locker device can be manufactured using the optical filter according to Embodiments 1 to 3 of the present disclosure. FIG. 20 is a diagram illustrating an example of a configuration of a wavelength locker device 100 using the optical filter according to the present disclosure. The wavelength locker device 100 includes a first optical power monitor 110, a second optical power monitor 120, a beam splitter 130, an optical input port 140, and the optical filter 10 according to the present disclosure. FIG. 20 illustrates an example in which the optical filter 10 according to Embodiment 1 is employed as an example of the optical filter according to the present disclosure, but the wavelength locker device according to the present disclosure can also employ the optical filters 10A to 10F shown in the variations of Embodiment 1, the optical filter 20 according to Embodiment 2, and the optical filter 30 according to Embodiment 3.

A part of the laser output from the laser light source 200 is input to the wavelength locker device 100 via the optical input port 140 by the beam splitter 210. A part of the input laser output is input to the first optical power monitor 110 by the beam splitter 130, and the remaining part is input to the second optical power monitor 120 via the optical filter 10. The first optical power monitor 110 and the second optical power monitor 120 measure the intensity of the input light, and output the measurement results to a temperature controller 220 as a control signal S1 and a control signal S2, respectively.

The temperature controller 220 associated with the laser light source 200 automatically adjusts the set temperature such that the difference between the output values of the first optical power monitor 110 and the second optical power monitor 120 is zero, based on control signals S1 and S2. As a result, it is possible to prevent a change in the wavelength of the laser light source 200 due to a temperature change and to stabilize (lock) the wavelength of the light output by the laser light source 200.

Note that, in Embodiment 4, the wavelength locker device has been described as an application example of the optical filter according to the present disclosure. However, the optical filter according to the present disclosure can be applied to various other optical devices.

Although the preferred embodiments have been described in detail above, the present disclosure is not limited to the specific embodiments, and various modifications and changes can be made within the scope of the description described in the claims.

The disclosure of Japanese Patent Application No. 2023-182082, filed on October 23, 2023, including the specification, drawings and abstract, is incorporated herein by reference in its entirety.

Industrial Applicability

The present disclosure is useful for an optical filter and a locker device.

Reference Signs List

10, 10A, 10B, 10C, 10D, 10E, 10F, 20, 30 Optical filter
11, 11E Incident portion
12 Tapered portion
13, 13A, 13B, 13C, 13D, 13E, 13F Core portion
14 Tapered portion
15 Output portion
16, 16A, 16B, 16C, 16D, 16E, 16F Cladding portion
17, 17A, 17B, 17C, 17D, 17E, 17F Satellite portion
171, 172 Region
18A N-type semiconductor structure
19A P-type semiconductor structure
41B Quantum well layer
42B Electrode
43C Thin-film heater
44D Substrate
45D Movable beam
46F Ion implantation region
21 Tapered portion
22, 23 Waveguide

24 Output portion
31 First incident portion
32 Second incident portion
33 Y-branch
34 Core portion
35 Satellite portion
36 Y-branch
37 First output portion
38 Second output portion
39 Cladding portion
100 Wavelength locker device
110 First optical power monitor
120 Second optical power monitor
130 Beam splitter
140 Optical input port
SL Signal light
CL, CL1, CL2 Control light

**Claims**

1. An optical filter, comprising:

   a core portion that is covered with a cladding portion, extends in one direction, and is capable of propagating light in a plurality of waveguide modes; and
   a satellite portion that is covered with the cladding portion, extends in the one direction while being apart from the core portion, has an effective refractive index higher than that of the cladding portion, and has a size smaller than a minimum size required for an optical material capable of propagating light in a single mode.

2. The optical filter according to claim 1, wherein
   a multi-mode waveguide constituted by the core portion and the cladding portion transitions light in a first waveguide mode to a second waveguide mode.

3. The optical filter according to claim 2, further comprising an output portion that does not output light in the second waveguide mode having been transitioned by the multi-mode waveguide, and outputs light in another waveguide mode.

4. The optical filter according to claim 2, further comprising an output portion that outputs light in the second waveguide mode having been transitioned by the multi-mode waveguide, and does not output light in another waveguide mode.

5. The optical filter according to any one of claims 2 to 4, wherein
   the satellite portion has a periodic structure periodically varying an effective refractive index of the multi-mode waveguide along the one direction.

6. The optical filter according to claim 5, wherein
   the periodic structure is a structure that periodically varies a distance between the core portion and the satellite portion.

7. The optical filter according to claim 6, wherein

   a period Λ of the periodic structure along the one direction is expressed by Expression 1:
   [1]

   $$\Lambda = 2\pi/(\beta_0 - \beta_1) \qquad \dots (\text{Expression 1})$$

   where $\beta_0$ is a propagation constant in the first waveguide mode, and $\beta_1$ is a propagation constant in the second waveguide mode.

8. The optical filter according to any one of claims 2 to 7, wherein

a temperature coefficient $\partial n_0/\partial T$ with respect to an effective refractive index $n_0$ in the first waveguide mode of the multi-mode waveguide and a temperature coefficient $\partial n_1/\partial T$ with respect to an effective refractive index $n_1$ in the first waveguide mode have a relationship of Expression 2:
[2]

$$\left|\frac{\partial n_1}{\partial T} - \frac{\partial n_0}{\partial T}\right| < \frac{|n_1 - n_0|}{\lambda} \cdot 10^{-4} \qquad \ldots \text{(Expression 2)}$$

where T is temperature, and $\lambda$ is wavelength of the light.

9. The optical filter according to claim 8, wherein
the core portion and the satellite portion have a channel-type waveguide structure, and for light having a wavelength $\lambda$, a width w of the core portion, a width $w_p$ of the satellite portion, a distance $w_g$ between the core portion and the satellite portion, and a height h of the core portion and the satellite portion are set to as follows:

$$1.5 \le \lambda \le 1.6;$$

$$0.5 \le w \le 0.9;$$

$$0.1 \le w_p \le 0.5;$$

$$0.1 \le w_g \le 0.8;$$

and

$$0.18 \le h \le 0.26.$$

10. The optical filter according to claim 8, wherein
the core portion and the satellite portion have a channel-type waveguide structure, and for light having a wavelength $\lambda$, a width w of the core portion, a width $w_p$ of the satellite portion, a distance $w_g$ between the core portion and the satellite portion, and a height h of the core portion and the satellite portion are set to as follows:

$$1.26 \le \lambda \le 1.36;$$

$$0.3 \le w \le 0.8;$$

$$0.1 \le w_p \le 0.5;$$

$$0.1 \le w_g \le 0.8;$$

and

$$0.18 \le h \le 0.26.$$

11. The optical filter according to claim 8, wherein
the core portion and the satellite portion have a rib-type waveguide structure, and for light having a wavelength $\lambda$, a width w of the core portion, a width $w_p$ of the satellite portion, a distance $w_g$ between the core portion and the satellite portion, a height h of the core portion and the satellite portion, and a height $h_r$ of a slab structure are set to as follows:

$$1.5 \leq \lambda \leq 1.6;$$

$$0.6 \leq w \leq 1.1;$$

$$0.1 \leq w_p \leq 0.5;$$

$$0.1 \leq w_g \leq 0.8;$$

$$0.18 \leq h \leq 0.26;$$

and

$$0.08 \leq h_r \leq 0.14.$$

**12.** The optical filter according to claim 8, wherein
the core portion and the satellite portion have a rib-type waveguide structure, and for light having a wavelength $\lambda$, a width w of the core portion, a width $w_p$ of the satellite portion, a distance $w_g$ between the core portion and the satellite portion, a height h of the core portion and the satellite portion, and a height $h_r$ of a slab structure are set to as follows:

$$1.26 \leq \lambda \leq 1.36;$$

$$0.5 \leq w \leq 1.0;$$

$$0.1 \leq w_p \leq 0.5;$$

$$0.1 \leq w_g \leq 0.8;$$

$$0.18 \leq h \leq 0.26;$$

and

$$0.08 \leq h_r \leq 0.14.$$

**13.** The optical filter according to claim 1, wherein
the satellite portion varies a phase difference between two waveguide modes in a multi-mode waveguide constituted by the core portion and the cladding portion, between a starting end portion and a terminal end portion of the multi-mode waveguide.

**14.** The optical filter according to claim 13, further comprising:

a first incident portion and a second incident portion connected to the starting end portion; and
a first output portion and a second output portion connected to the terminal end portion.

**15.** The optical filter according to claim 13 or 14, wherein
the core portion and the satellite portion constitute an asymmetric Mach-Zehnder interferometer (AZMI).

**16.** The optical filter according to any one of claims 13 to 15, wherein

a temperature coefficient $\partial n_0/\partial T$ with respect to an effective refractive index $n_0$ in one waveguide mode of the multi-mode waveguide and a temperature coefficient $\partial n_1/\partial T$ with respect to an effective refractive index $n_1$ in another one waveguide mode have a relationship of Expression 3:

[3]

$$\left|\frac{\partial n_1}{\partial T} - \frac{\partial n_0}{\partial T}\right| < \frac{|n_1 - n_0|}{\lambda} \cdot 10^{-4} \qquad \dots \text{(Expression 3)}$$

where T is temperature, and $\lambda$ is wavelength of the light.

17. An optical filter, comprising:

a core portion that is covered with a cladding portion, extends in one direction, and has a plurality of waveguide modes; and
a satellite portion that is covered with the cladding portion, extends in the one direction while being apart from the core portion, has an effective refractive index higher than that of the cladding portion, and does not have a waveguide mode.

18. A wavelength locker device, comprising:

a first optical power monitor that measures an optical intensity of at least a part of a laser output from a laser light source;
a second optical power monitor that measures an optical intensity of at least a part of the laser output having passed through the optical filter according to any one of claims 1 to 17; and
a temperature controller that adjusts a temperature of the laser light source such that a difference between an output value of the first optical power monitor and an output value of the second optical power monitor becomes zero.

10

FIG. 1A

FIG. 1B

FIG. 2

FIG. 3

FIG. 4A

FIG. 4B

$\varepsilon = 0$

FIG. 4C

$\varepsilon \neq 0$

FIG. 4D

$\epsilon = (\beta_B - \beta_A)/2$

FIG. 4E

FIG. 5A

$$\Lambda = 2\pi/(\beta_0 - \beta_1) = \pi/\sqrt{\kappa^2 + \epsilon^2}$$

$$L_{crit} = \pi/\delta$$

FIG. 5B

$$\Lambda = 2\pi/(\beta_0 - \beta_1) = \pi/\sqrt{\kappa^2 + \epsilon^2}$$

$$L_{crit} = \pi/\delta$$

FIG. 5C

FIG. 6A

FIG. 6B

FIG. 6C

FIG. 6D

**FIG. 7A**

**FIG. 7B**

**FIG. 7C**

**FIG. 7D**

FIG. 8A

FIG. 8B

**FIG. 9A**

**FIG. 9B**

**FIG. 9C**

42B

17B

13B

16B

17B

E →

E →

42B

10B

## FIG. 10A

17B    13B    17B    10B

41B

## FIG. 10B

43C

16C

17C

F →

10C

13C

17C

43C

F →

## FIG. 11A

43C    17C    13C    17C    10C

## FIG. 11B

FIG. 12A

FIG. 12B

FIG. 13

FIG. 14

FIG. 15

FIG. 16

31  35  <u>30</u>  37

33  34  35  32  36  38

**FIG. 17**

50  51

$\Delta L/2$  52  $\Delta L/2$

$L'$

**FIG. 18**

LOWER-ORDER MODE

HIGHER-ORDER MODE

FIG. 19A

FIG. 19B

EXAMPLE OF MODE SHAPE WHEN LIGHT IS INCIDENT ONLY ON 31

EXAMPLE OF SHAPE OF SYMMETRIC (S) MODE

EXAMPLE OF SHAPE OF ANTISYMMETRIC (AS) MODE

FIG. 19C

FIG. 19D

EXAMPLE OF MODE SHAPE WHEN LIGHT IS INCIDENT ONLY ON 32

EXAMPLE OF SHAPE OF SYMMETRIC (S) MODE

EXAMPLE OF SHAPE OF ANTISYMMETRIC (AS) MODE

FIG. 19E

**FIG. 20**

EP 4 779 370 A1

# INTERNATIONAL SEARCH REPORT

International application No.

**PCT/JP2024/032226**

## A. CLASSIFICATION OF SUBJECT MATTER

*G02B 6/12*(2006.01)i; *G02F 1/01*(2006.01)n
FI: G02B6/12 321; G02B6/12 341; G02F1/01 C

According to International Patent Classification (IPC) or to both national classification and IPC

## B. FIELDS SEARCHED

Minimum documentation searched (classification system followed by classification symbols)

G02B6/12-6/14; G02F1/00-1/125; G02F1/21-7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2018-128642 A (OKI ELECTRIC INDUSTRY CO., LTD.) 16 August 2018 (2018-08-16) paragraphs [0015]-[0018], fig. 1 | 1-18 |
| Y | JP 2006-139269 A (HITACHI CHEMICAL CO., LTD.) 01 June 2006 (2006-06-01) paragraphs [0022]-[0039], fig. 1-2 | 1-18 |
| Y | MARCUSE, D. Directional couplers made of nonidentical asymmetric slabs. Part II: Grating-assisted couplers. Journal of Lightwave Technology. February 1987, vol. 5, no. 2, pp. 268-273, DOI: 10.1109/JLT.1987.1075493 p. 268, left column, line 12 to p. 273, right column, line 18, fig. 1-7 | 5-12, 18 |
| Y | JP 2006-330104 A (NIPPON TELEGRAPH AND TELEPHONE CORPORATION) 07 December 2006 (2006-12-07) paragraphs [0018]-[0054], fig. 1-5 | 8-12, 16, 18 |
| Y | JP 2011-221291 A (NEC CORPORATION) 04 November 2011 (2011-11-04) paragraph [0017], fig. 3(c) | 14-16, 18 |

✓ Further documents are listed in the continuation of Box C.   ✓ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 November 2024** | **26 November 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT

| | International application No. |
|---|---|
| | **PCT/JP2024/032226** |

### C. DOCUMENTS CONSIDERED TO BE RELEVANT

| Category* | Citation of document, with indication, where appropriate, of the relevant passages | Relevant to claim No. |
|---|---|---|
| Y | JP 2019-033156 A (FUJITSU LIMITED) 28 February 2019 (2019-02-28) paragraphs [0054]-[0059], fig. 9 | 18 |
| A | JP 2005-316019 A (NIPPON TELEGRAPH AND TELEPHONE CORPORATION) 10 November 2005 (2005-11-10) entire text, all drawings | 1-18 |
| A | WO 2004/083953 A1 (NIPPON TELEGRAPH AND TELEPHONE CORPORATION) 30 September 2004 (2004-09-30) entire text, all drawings | 1-18 |
| A | US 2015/0153512 A1 (FRAUNHOFER-GESELLSCHAFT ZUR FOERDERUNG DER ANGEWANDTEN FORSCHUNG E.V.) 04 June 2015 (2015-06-04) entire text, all drawings | 1-18 |
| A | US 2007/0189669 A1 (TORMEN, M. et al.) 16 August 2007 (2007-08-16) entire text, all drawings | 1-18 |
| A | US 2002/0146226 A1 (DAVIS, M. A. et al.) 10 October 2002 (2002-10-10) entire text, all drawings | 1-18 |

Form PCT/ISA/210 (second sheet) (July 2022)

## INTERNATIONAL SEARCH REPORT
### Information on patent family members

International application No.

**PCT/JP2024/032226**

| Patent document cited in search report | | | Publication date (day/month/year) | Patent family member(s) | | | Publication date (day/month/year) |
|---|---|---|---|---|---|---|---|
| JP | 2018-128642 | A | 16 August 2018 | (Family: none) | | | |
| JP | 2006-139269 | A | 01 June 2006 | (Family: none) | | | |
| JP | 2006-330104 | A | 07 December 2006 | (Family: none) | | | |
| JP | 2011-221291 | A | 04 November 2011 | US paragraph [0028], fig. 3C CN | 2011/0249937 102213794 | A1 A | |
| JP | 2019-033156 | A | 28 February 2019 | US paragraphs [0066]-[0072], fig. 9 | 2019/0044300 | A1 | |
| JP | 2005-316019 | A | 10 November 2005 | (Family: none) | | | |
| WO | 2004/083953 | A1 | 30 September 2004 | US EP KR CN | 2007/0058896 1605303 10-2005-0093764 1705908 | A1 A1 A A | |
| US | 2015/0153512 | A1 | 04 June 2015 | WO EP | 2014/023804 2696227 | A2 A1 | |
| US | 2007/0189669 | A1 | 16 August 2007 | WO | 2006/007868 | A1 | |
| US | 2002/0146226 | A1 | 10 October 2002 | WO | 2002/075405 | A2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006330104 A

- JP 2023182082 A

**Non-patent literature cited in the description**

- **D. MARCUSE**. *J. Lightwave Technol.*, 1987, vol. LT-5 (2), 268-278
- **D. MARCUSE**. *J. Lightwave Technol.*, 1987, vol. LT-5 (2), 268-273

- **J. J. ACKERT et al.** *Optics Express*, 2011, vol. 19 (13), 11969